# EUROPÄISCHE PATENTSCHRIFT

(11) **EP 0 260 343 B1**
(45) Veröffentlichungstag und Bekanntmachung des Hinweises auf die Patenterteilung: **20.01.1993**
(21) Anmeldenummer: 86113569.7
(22) Anmeldetag: 02.10.1986
(51) Int. Cl.: G05D 23/19, F24F 11/00

(54) **Verfahren und Vorrichtung zur Temperaturregelung von Heizungs- und Kühlanlagen**
Temperature control method and apparatus for heating and cooling plants
Procédé et dispositif de régulation de température pour installation de chauffage et de refroidissement

(30) Priorität: 17.09.1986 EP 86112825
(43) Veröffentlichungstag der Anmeldung: 23.03.1988
(73) Patentinhaber: Viessmann Werke GmbH & Co., 35107 Allendorf (Eder) (DE)
(72) Erfinder: Viessmann, Hans, Dr., D-3559 Battenberg/Eder (DE)
(74) Vertreter: Beetz & Partner Patentanwälte

(56) Entgegenhaltungen:
- EP-A- 0 019 344
- EP-A- 0 129 140
- DE-A- 2 811 153
- DE-A- 3 437 264
- FR-A- 2 470 409
- FR-A- 2 569 257
- GB-A- 2 153 554
- US-A- 4 274 475

## Beschreibung

Die Erfindung betrifft ein Verfahren sowie eine Vorrichtung zur Temperaturregelung von Heizungs- bzw. Kühl- und Klimaanlagen mit einer Wärme- bzw. Kältequelle veränderbarer und einstellbarer Temperatur nach den Oberbegriffen der Patentansprüche 1, 2 und 8 insbesondere auf der Basis eines elektronischen, mikroprozessorgesteuerten Regelsystems.

Heizsysteme mit einer Wärmequelle, die ein zur Beheizung von Heizkörpern, Wärmeaustauschern oder anderen Objekten dienendes fluides, insbesondere flüssiges oder gasförmiges Wärmeträgermedium veränderbarer Temperatur liefern, insbesondere Heizkessel mit Öl- oder Gasbrennern, deren Soll-Temperatur nach der Außentemperatur geregelt wird, sind bereits seit langem Stand der Technik. Derartige sog. außentemperaturgeführte Heizungssysteme mit "gleitender" Steuerung der Soll-Temperatur des Heizkessels bzw. der Vorlauftemperatur nach einem Drei- oder Vierwege-Mischventil sind jedoch mit zahlreichen Nachteilen behaftet, zu denen insbesondere die Notwendigkeit der Anbringung eines Außentemperatursensors gehört, was besonders bei Altbauten mit einem erheblichen baulichen und finanziellen Aufwand verbunden sein kann, zumal auch eine Leitung zum entsprechenden Heizungsregler, der üblicherweise in der Nähe der Wärmequelle vorgesehen wird, erforderlich ist. Weitere Nachteile liegen darin, daß die Soll-Temperatur der Wärmequelle grundsätzlich nach der jeweils herrschenden Außentemperatur gesteuert wird, wobei individuelle Wohn- bzw. Heizgewohnheiten, das heißt die Wahl bestimmter Heizzeiten, das Lüften von Räumen etc., nicht berücksichtigt werden können. Außerdem sind die zugehörigen Regler wegen des Außentemperatursensors konstruktiv aufwendig. Hinzu kommt ferner, daß der jeweils im Heizungssystem vorliegende Wärmebedarf bzw. die effektive Wärmeabnahme von der Wärmequelle bisher nicht bei der Steuerung der Soll-Temperatur der Wärmequelle berücksichtigt wurde.

Gleichartige Nachteile wie die oben erläuterten Heizungssysteme weisen ortsfeste wie auch mobile oder in Fahrzeugen eingebaute Kühlanlagen und Klimaanlagen auf, bei denen eine Außentemperaturführung der Soll-Temperatur der Kältequelle vorgesehen ist. Auch in diesen Fällen ist bisher ein Außentemperatursensor erforderlich, der einen entsprechenden Leitungs-, Installations- und Regleraufwand mit sich bringt, was gerade bei Fahrzeugen, in die solche Anlagen nachträglich eingebaut werden, besonders aufwendig ist. Hinzukommt auch hier, daß der effektive Kältebedarf bzw. die effektiv erforderliche Kühlleistung bisher bei der Steuerung der Soll-Temperatur der Kältequelle nicht berücksichtigt wird.

Aus EP-A-19 344 sind ein Verfahren und eine Vorrichtung zur Kontrolle der Temperatur mit einer regelbaren Heizung beheizter Innenräume bekannt, bei denen eine mit einer fiktiven "äquivalenten Außentemperatur" korrelierte Meßgröße gemessen und der erhaltene Meßwert zur Einstellung der Soll-Temperatur der Wärmequelle verwendet werden. Die fiktive äquivalente Außentemperatur entspricht dabei im wesentlichen der tatsächlichen Außentemperatur, die hinsichtlich Störgrößen, wie Niederschlag, Wind, Sonneneineinstrahlung und Wärmeverlust, korrigiert ist. Wesentlich ist bei diesem Stand der Technik, daß die zur Ermittlung der äquivalenten Außentemperatur verwendete Meßgröße eine dem jeweils vorliegenden Wärmebedarf bzw. Wärmedurchsatz entsprechende Meßgröße ist. Der jeweilige Wärmebedarf wird dabei z.B. durch Messung der zur Aufrechterhaltung einer vorgegebenen Temperatur erforderlichen Betriebsdauer der Wärmequelle, durch Messung der resultierenden Temperaturdifferenz nach Ablauf einer vorgegebenen Zeitspanne oder durch Messung der zur Erreichung einer vorgegebenen Temperaturdifferenz erforderlichen Zeitspanne ermittelt. Nach diesem Stand der Technik geschieht folglich die Ermittlung der äquivalenten Außentemperatur und damit die Festlegung der Soll-Temperatur der Wärmequelle durch indirekte, in jedem Falle aber messende Bezugnahme auf die tatsächliche Außentemperatur.

Der Erfindung liegt die Aufgabe zugrunde, unter Vermeidung der oben erläuterten Nachteile des Stands der Technik Verfahren sowie Vorrichtungen zur Temperaturregelung von zentralen und dezentralen Heizungsanlagen mit einer Wärme- bzw. Kältequelle veränderbarer und einstellbarer Temperatur, vorzugsweise mit Mikroprozessorsteuerung, anzugeben, mit denen eine Steuerung der Soll-Temperatur der Wärme- bzw. Kältequelle ohne Außentemperatursensor und ohne messende Bezugnahme auf die tatsächliche Außentemperatur, d.h. ohne Messung einer damit korrelierten Meßgröße, möglich ist, wobei zugleich individuelle Wohn- bzw. Heizgewohnheiten sowie der jeweils vorliegende Wärme- bzw. Kältebedarf des Systems automatisch berücksichtigt werden können.

Die Aufgabe wird gemäß dem Kennzeichen der Ansprüche 1, 2 und 8 gelöst.

Die zugehörigen abhängigen Ansprüche betreffen vorteilhafte Weiterbildungen der Erfindungskonzeption.

Das erfindungsgemäße Verfahren zur Temperaturregelung von zentralen und dezentralen Heizungsanlagen mit einer Wärmequelle veränderbarer und einstellbarer Temperatur, der
- über einen mit Vor- und Rücklauf der Wärmequelle verbundenen geschlossenen Kreislauf eines fluiden Wärmeträgermediums
   oder
- über ein offenes Leitungssystem mit einem insbesondere gasförmigen Wärmeträgermedium
Wärme entzogen wird, die Heizkörpern, Wärmeaustauschern oder anderen zu beheizenden Objekten als Wärmeverbrauchern zugeführt wird,
beruht auf der Regelung der Temperatur der Wärmequelle nach einer Soll-Temperatur, die in Abhängigkeit von einer zeitlich veränderlichen Referenztemperatur gesteuert wird, und ist dadurch gekennzeichnet, daß die Soll-Temperatur der Wärmequelle ohne messende Bezugnahme auf die tatsächlich herrschende Außentemperatur gemäß einer vorgegebenen Kennlinie nach charakteristischen mittleren Außentemperaturen der betreffenden Klimazone, in der sich die Heizungsanlage befindet, gesteuert wird,
die bestimmten Kalenderdaten und ggfs. zusätzlich bestimmten Tageszeiten zugeordnet sind.

Das erfindungsgemäße Verfahren zur Temperaturregelung von zentralen und dezentralen Kühl- und Klimaanlagen mit
- einer Kältequelle veränderbarer und einstellbarer Temperatur, der
   - über einen mit Vor- und Rücklauf der Kältequelle verbundenen geschlossenen Kreislauf eines fluiden Wärmeträgermediums
      oder
   - über ein offenes Leitungssystem mit einem insbesondere gasförmigen Wärmeträgermedium
   Wärme zugeführt wird, die Kühlern, Wärmeaustauschern oder anderen zu kühlenden Objekten als Wärmequellen zur Abkühlung entzogen wird,
beruht auf der Regelung der Temperatur der Kältequelle nach einer Soll-Temperatur, die in Abhängigkeit von einer zeitlich veränderlichen Referenztemperatur gesteuert wird, und ist dadurch gekennzeichnet, daß die Soll-Temperatur der Kältequelle ohne messende Bezugnahme auf die tatsächliche Außentemperatur gemäß einer vorgegebenen Kennlinie nach charakteristischen mittleren Außentemperaturen der betreffenden Klimazone, in der sich die Kühlanlage befindet, gesteuert wird, die bestimmten Kalenderdaten und ggfs. zusätzlich bestimmten Tageszeiten zugeordnet sind.

Beide erfindungsgemäßen Grundverfahren zur Temperaturregelung von Heizungs- und Kühlanlagen werden vorzugsweise mit einem elektronischen Regelsystem mit einem Mikrocomputer mit einer zentralen Recheneinheit (CPU), einem Schreib/Lese-Speicher (RAM), mindestens einem nicht flüchtigen Speicher und ggfs. einer E/A-Schnittstelle und unter Verwendung von Temperaturfühlern zur Erfassung der Ist-Temperatur der Wärme- bzw. Kältequelle sowie gegebenenfalls von Wärme- bzw. Kälteverbrauchern von Wänden und/oder von Raumluft durchgeführt.

Die erfindungsgemäße Vorrichtungskonzeption, die zur Durchführung dieser Verfahren konzipiert ist, umfaßt prinzipiell eine Einrichtung zur Regelung der Temperatur der Wärme- bzw. Kältequelle nach einer veränderbaren und einstellbaren Soll-Temperatur und eine Einrichtung zur Steuerung der Soll-Temperatur der Wärme- bzw. Kältequelle in Abhängigkeit von einer zeitlich veränderlichen Referenztemperatur; sie ist dadurch gekennzeichnet, daß die Einrichtung zur Steuerung der Soll-Temperatur der Wärme- bzw. Kältequelle
(A) die Soll-Temperatur der Wärme- bzw. Kältequelle ohne messende Bezugnahme auf die tatsächliche Außentemperatur gemäß einer vorgegebenen Kennlinie nach bestimmten Kalenderdaten und ggfs. zusätzlich bestimmten Tageszeiten zugeordneten charakteristischen mittleren Außentemperaturen der betreffenden Klimazone steuert, in der sich die Heizungs- bzw. Kühlanlage befindet,
   und aufweist:
   (B1)
      - mindestens einen nicht flüchtigen Speicher, in dem die Kennlinien bzw. diskrete Einzelwerte der charakteristischen mittleren Außentemperatur und/oder die Kennlinien bzw. diskrete Einzelwerte der sich jeweils aufgrund der charakteristischen mittleren Außentemperatur ergebenden Soll-Temperatur der Wärme- bzw. Kältequelle und ggfs. entsprechende Korrekturwerte für die vorgegebenen bestimmten Kalendertage und ggfs. ihnen zugeordnete Tageszeiten für eine oder mehrere Klimazonen gespeichert oder speicherbar sind,
         und
      - eine Einrichtung zur Abfrage bzw. zum Auslesen der im nicht flüchtigen Speicher gespeicherten Kennlinien bzw. diskreten Wertepaare, die zu den vorgegebenen Abfragezeitpunkten zur Steuerung der Soll-Temperatur der Wärme- bzw. Kältequelle verwendet werden,
      - sowie gegebenenfalls eine Einrichtung zum Einspeichern der betreffenden Kennlinien bzw. diskreten Einzelwerte im nicht flüchtigen Speicher
      oder
   (B2)
      - eine Einrichtung zum Empfang oder zur Abfrage von Daten bzw. Werten der charakteristischen mittleren Außentemperatur und/oder der sich daraus ergebenden Soll-Temperatur der Wärme- bzw. Kältequelle und/ggfs. entsprechender Korrekturwerte von einer externen Datenquelle oder Steuereinrichtung zur Steuerung der Soll-Temperatur der Wärme- bzw. Kältequelle
      - sowie gegebenenfalls eine Einrichtung zur Rückmeldung von Temperatur- und/oder Einstellwerten zu einer externen Datenquelle oder Steuereinrichtung.

Der nicht flüchtige Speicher der Vorrichtung gemäß der Erfindung kann ein mechanischer Speicher, insbesondere in Form von mit Synchronantrieb versehenen und mechanisch oder elektrisch bzw. elektronisch abtastbaren Kurvenscheiben, oder durch konventionelle diskrete Elektronik mit Analog- oder Digitalschaltungen aufgebaut sein. Bevorzugte Speicher sind ROMs, PROMs, EPROMs und EEPROMs.

Ferner kann die erfindungsgemäße Vorrichtung günstigerweise auch auf der Basis von Gate-Arrays aufgebaut sein oder Gate-Arrays als wesentliche Logikkomponenten enthalten.

Eine bevorzugte Vorrichtung gemäß der Erfindung ist so ausgebildet, daß zumindest die Einrichtung zur Steuerung der Soll-Temperatur der Wärme- bzw. Kältequelle einen Mikrocomputer mit einer zentralen Recheneinheit (CPU), einem Schreib-/Lese-Speicher (RAM), mindestens einem nicht flüchtigen Speicher und ggfs. einer E/A-Schnittstelle aufweist. Ferner sind bevorzugt Temperatursensoren zur Erfassung der Ist-Temperatur der Wärme- bzw. Kältequelle sowie gegebenenfalls der Wärmeverbraucher bzw. Kälteverbraucher (Wärmelieferanten) von Wänden und/oder von Raumluft vorgesehen.

Eine besonders günstige Kompakt-Vorrichtung ist gekennzeichnet durch eine Steuer- und Regeleinheit mit
(A) einem Mikrocomputer mit einer zentralen Recheneinheit (CPU), einem Schreib/Lese-Speicher (RAM) und einem nicht flüchtigen Speicher für
   - Kalenderdaten sowie ggfs. Tageszeiten zugeordnete charakteristische mittlere Außentemperaturen für eine oder mehrere Klimazonen
   - sowie gegebenenfalls
      - Korrekturwerte für die theoretischen mittleren Außentemperaturen,
      - korrigierte Werte der theoretischen mittleren Außentemperaturen,
      - Soll-Temperaturen der Wärme- bzw. Kältequelle,
      - Korrekturwerte der Soll-Temperaturen der Wärme- bzw. Kältequelle,
      - Soll-Temperaturen für Tag-, Nacht- und Frostschutzbetrieb,
      - Eichwerte von Reglerparametern
         sowie
      - von einer externen Datenquelle oder Steuereinrichtung abgerufene oder empfangene entsprechende Datenwerte,
   der im wesentlichen folgende Operationen durchführt:
   - Verarbeitung der Eingangsdaten,
   - zeitgesteuerte bzw. timergesteuerte Abfrage der gespeicherten charakteristischen mittleren Außentemperatur sowie ggfs. von Korrekturwerten oder von gespeicherten Soll-Temperaturen zu vorgegebenen Abfragezeitpunkten
      oder
   - Empfang bzw. Abrufen entsprechender Datenwerte von einer externen Datenquelle oder Steuereinrichtung, ggfs. unter Speicherung oder Zwischenspeicherung,
   - Ermittlung der Soll-Temperatur der Wärme bzw. Kältequelle bzw. des fluiden Wärmeträgermediums in Abhängigkeit von dem jeweiligen Kalenderdatum und gegebenenfalls zusätzlich der jeweiligen Tageszeit zugeordneten charakteristischen mittleren Außentemperatur der betreffenden Klimazone zu bestimmten, vorgegebenen Abfragezeitpunkten,
   - ggfs. Korrektur der aufgrund der charakteristischen mittleren Außentemperatur für die vorgegebenen Abfragezeitpunkte erhaltenen Soll-Temperatur der Wärme- bzw. Kältequelle,
   - Steuerung des Reglers der Wärmequelle, ggfs. nach Datenwandlung,
   - Vergleich der Soll- und Ist-Temperaturen,
   - Ansteuerung von Relais und/oder Stellgliedern in Abhängigkeit von den Soll- und Ist-Temperaturen nach vorgegebener fester oder wählbarer Reglercharakteristik
   - sowie ggfs. Bedienung einer oder mehrerer Schnittstellen und Datenwandlung,
(B) einem A/D-Wandler zur A/D-Wandlung der analogen Ausgangssignale der Temperatursensoren,
(C) Treibern für Relais und/oder Ansteuereinrichtungen für Stellglieder
   und
(D) einem oder mehreren Relais und/oder Stellgliedern zur Ansteuerung der Wärmeerzeugungseinrichtung der Wärmequelle bzw. der Kälteerzeugungseinrichtung der Kältequelle, insbesondere von Brennern in Heizungskesseln, von Mischventilen, Umwälzpumpen, Regelventilen und/oder Speicher-Ladepumpen.

Eine besonders praxisgerechte Vorrichtung gemäß der Erfindung zur Temperaturregelung von zentralen und dezentralen Heizungs- und Kühlanlagen umfaßt
- eine Wärme- oder Kältequelle veränderbarer und einstellbarer Temperatur, der
   über einen mit Vor- und Rücklauf der Wärme- bzw. Kältequelle verbundenen geschlossenen Kreislauf eines fluiden Wärmeträgermediums
   oder
   über ein offenes Leitungssystem mit einem insbesondere gasförmigen Wärmeträgermedium
   Wärme entzogen bzw. zugeführt wird, die Heizkörpern, bzw. Kühlern, Wärmeaustauschern oder anderen zu beheizenden bzw. zu kühlenden Objekten als Wärmeverbrauchern bzw. Wärmelieferanten zugeführt bzw. zur Abkühlung entzogen wird,
- ein elektronisches Regelsystem mit einem Mikrocomputer mit einer zentralen Recheneinheit (CPU), einem Schreib-/Lese-Speicher (RAM), mindestens einem nicht flüchtigen Speicher und ggfs. einer E/A-Schnittstelle
   sowie
- Temperatursensoren zur Erfassung der Ist-Temperatur der Wärme- bzw. Kältequelle sowie ggfs. von Wärmeverbrauchern bzw. zu kühlenden Objekten, von Wänden und/oder von Raumluft besteht aus zwei getrennten Komponenten, die jeweils durch Mikroprozessorsteuerung 'intelligent' sind; sie ist gekennzeichnet durch

(A) eine vorzugsweise unabhängig von der Wärme- bzw. Kältequelle vorgesehene Steuereinheit mit
   (A1) einem Mikrocomputer mit einer zentralen Recheneinheit (CPU), einem Schreib/Lese-Speicher (RAM) und einem nicht flüchtigen Speicher für
      - Kalenderdaten sowie ggfs. Tageszeiten zugeordnete charakteristische mittlere Außentemperaturen für eine oder mehrere Klimazonen
      - sowie gegebenenfalls
         - Korrekturwerte für die charakteristischen mittleren Außentemperaturen,
         - korrigierte Werte der charakteristischen mittleren Außentemperaturen,
         - Soll-Temperaturen der Wärme- bzw. Kältequelle,
         - Korrekturwerte der Soll-Temperaturen der Wärme- bzw. Kältequelle,
         - Soll-Temperaturen für Tag-, Nacht- und Frostschutzbetrieb,
         - Eichwerte von Reglerparametern
            sowie
         - von einer externen Datenquelle oder Steuereinrichtung abgerufene oder empfangene entsprechende Datenwerte,
      - der im wesentlichen folgende Operationen durchführt:
      - Verarbeitung der Eingabedaten,
      - zeitgesteuerte bzw. timergesteuerte Abfrage der gespeicherten charakteristischen mittleren Außentemperatur sowie ggfs. von Korrekturwerten oder von gespeicherten Soll-Temperaturen zu vorgegebenen Abfragezeitpunkten
         oder
      - Empfang bzw. Abrufen entsprechender Datenwerte von einer externen Datenquelle oder Steuereinrichtung, ggfs. unter Speicherung oder Zwischenspeicherung,
      - Ermittlung der Soll-Temperatur der Wärme- bzw. Kältequelle bzw. des fluiden Wärmeträgermediums in Abhängigkeit von dem jeweiligen Kalenderdatum und ggfs. zusätzlich der jeweiligen Tageszeit zugeordneten charakteristischen mittleren Außentemperatur der betreffenden Klimazone zu bestimmten, vorgegebenen Abfragezeitpunkten,
      - ggfs. Korrektur der aufgrund der charakteristischen mittleren Außentemperatur für die vorgegebenen Abfragezeitpunkte erhaltenen Soll-Temperatur der Wärme- bzw. Kältequelle
         und
      - Steuerung des Reglers der Wärmequelle, ggfs. nach Datenwandlung sowie über eine Schnittstelle,
      und
      (A2) einer Schnittstelle zu einem Regler
      sowie
   (B) einen Regler für die Temperatur der Wärme- bzw. Kältequelle, der an, in oder bei der Wärme- bzw. Kältequelle vorgesehen ist,
      mit
      - einer Schnittstelle zur Datenübertragung zwischen Regler und Steuereinheit,
      - einem A/D-Wandler zur A/D-Wandlung der analogen Ausgangsignale der Temperatursensoren
      - einem Mikrocomputer mit einer zentralen Recheneinheit (CPU), einem Schreib/Lese-Speicher und einem nicht flüchtigen Speicher, der folgende Operationen durchführt:
         - Vergleich der Soll- und Ist-Temperaturen,
         - Ansteuerung von Relais und/oder Stellgliedern in Abhängigkeit von den Soll- und Ist-Temperaturen nach vorgegebener fester oder wählbarer Reglercharakteristik,
         - Bedienung der Schnittstelle zur Steuereinheit und ggfs. Datenwandlung für die Schnittstelle,
      - Treibern für Relais und/oder Ansteuereinrichtungen für Stellglieder
         und
      - einem oder mehreren Relais und/oder Stellgliedern zur Ansteuerung der Wärmeerzeugungseinrichtung der Wärmequelle bzw. der Kälteerzeugungseinrichtung der Kältequelle, insbesondere von Brennern in Heizungskesseln, von Mischventilen, Umwälzpumpen, Regelventilen und/oder Speicher-Ladepumpen.

Die Erfindungskonzeption beruht also auf dem grundlegenden Prinzip, eine quasi gleitende, nach der Außentemperatur geführte Regelung der Soll-Temperatur der Wärme- bzw. Kältequelle auf der Basis von in einem nicht flüchtigen Speicher abgespeicherten Daten zur charakteristischen mittleren Außentemperatur an bestimmten Kalendertagen und ggfs. auch zu bestimmten zugehörigen Tageszeiten vorzunehmen, wobei entsprechende Kennlinien oder Datensätze zur theoretischen mittleren Außentemperatur auf mehrere Klimazonen und vorzugsweise vier Klimazonen bezogen sind. Dabei wird die Soll-Temperatur der Wärme- bzw. Kältequelle zeitproportional bzw. mit einer wählbaren Voreilung oder Hysterese zu einer charakteristischen mittleren Außentemperatur gesteuert, die ggfs. nach Tageszeit und/oder anderen Kriterien korrigiert wird.

Die wichtigste Korrektur hierbei besteht in der Berücksichtigung des zeitlichen Temperaturgradienten der Ist-Temperatur der Wärmequelle bei Aufheizung, also der Aufheiz- oder Abkühlgeschwindigkeit, die als entsprechender Korrekturparameter bei der Steuerung der Soll-Temperatur der Wärme- bzw. Kältequelle berücksichtigt wird. Auf diese Weise kann auch ohne Raumtemperatursensor in Abhängigkeit vom ggfs. auch anderweitig ermittelten Wärme- bzw. Kältebedarf des Systems bzw. der Wärme- oder Kälteabgabe an die Verbraucher eine vorgegebene Sollwertkurve der Temperatur der Wärme- bzw. Kältequelle entsprechend verändert werden.

Die Erfindungskonzeption wird im folgenden anhand der Zeichnungen näher erläutert, die sich, soweit sie das erfindungsgemäße Verfahren und die erfindungsgemäße Vorrichtung betreffen, auf Heizung und Heizungsanlagen beziehen; das Konzept der Erfindung ist jedoch in gleicher Weise auch für Kühl- und Klimaanlagen anwendbar.

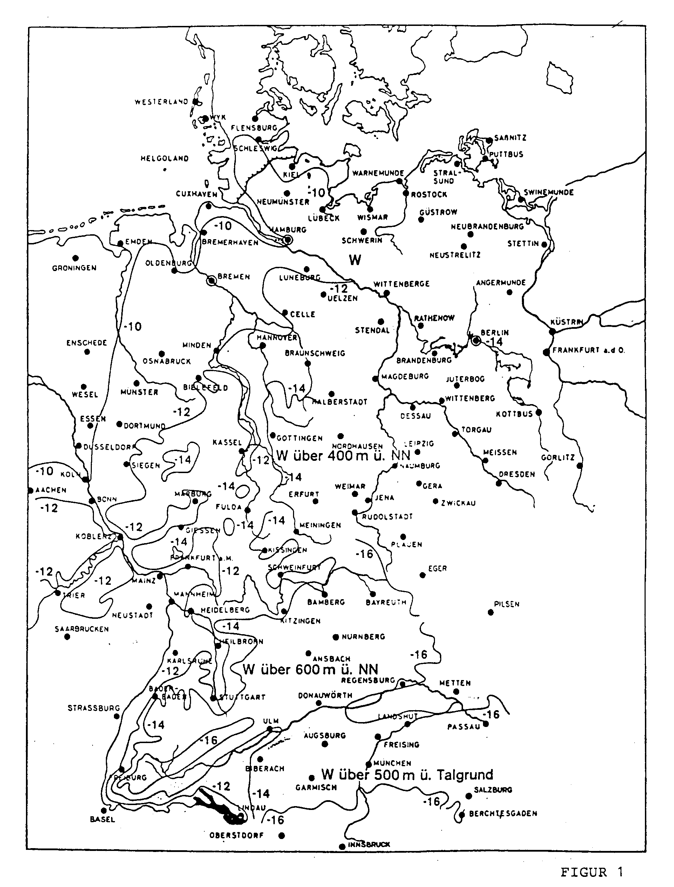

Die Erfindung geht von der Grundannahme aus, daß sich diejenigen geographischen Gebiete, in denen Heizungs- oder Kühl- bzw. Klimaanlagen des zugrundeliegenden Typs installiert werden bzw. sind, in mehrere Klimazonen aufteilen lassen, wobei die Anzahl der zur Berücksichtigung unterschiedlicher klimatischer Verhältnisse erforderlichen Klimazonen sehr gering ist, und z.B. für Deutschland vier Klimazonen ausreichend sind. Die entsprechenden Verhältnisse sind in Fig. 1 dargestellt. Gezeigt ist eine Isothermenkarte der Bundesrepublik Deutschland (DIN 4701, Teil 2, Seite 17), wobei die tiefsten Zweitagesmittel der Lufttemperatur in °C (bezogen auf 10maliges Auftreten in 20 Jahren, im Zeitraum von 1951 bis 1970) als Parameter angegeben sind. Es sind vier Klimazonen ersichtlich, nämlich mit einem tiefsten Zweitagesmittel der Lufttemperatur von -16, -14, -12 bzw. -10 °C.

Die Erfindungskonzeption beruht nun darauf, daß für jede gewählte Klimazone der Verlauf der charakteristischen mittleren Außentemperatur während eines Kalenderjahrs, der aus veröffentlichten meteorologischen Daten allgemein zugänglich ist, in einem nicht flüchtigen Speicher, insbesondere eines Mikroprozessorsystems, gespeichert und anstelle der herkömmlicherweise direkt mit einem Außentemperatursensor ermittelten Außentemperaturwerte zur Steuerung der Soll-Temperatur der Wärme- bzw. Kältequelle herangezogen wird, wobei auch eine Zusammenfassung mehrerer Klimazonen möglich ist.

Der mittlere Temperaturverlauf der Außentemperatur während eines Kalenderjahrs, d.h. die unterschiedlichen Temperaturprofile für verschiedene Gegenden, ist beispielsweise Gegenstand von DIN 4710.

Das für die jeweilige Klimazone repräsentative Temperaturprofil der theoretischen mittleren Außentemperatur für alle Kalendertage bzw. Abfragezeitpunkte eines Kalenderjahrs wird so ermittelt, daß zunächst eine Zuordnung zu einer Klimazone getroffen wird, worauf dann aus vorhandenen Einzelkurven der mittleren Außentemperatur und vorliegenden Minimal- und Maximalwerten eine charakteristische mittlere Kurve festgelegt wird, die dann erfindungsgemäß als relevantes Temperaturprofil für die jeweilige Klimazone zur Steuerung der Soll-Temperatur der Wärme- bzw. Kältequelle herangezogen wird.

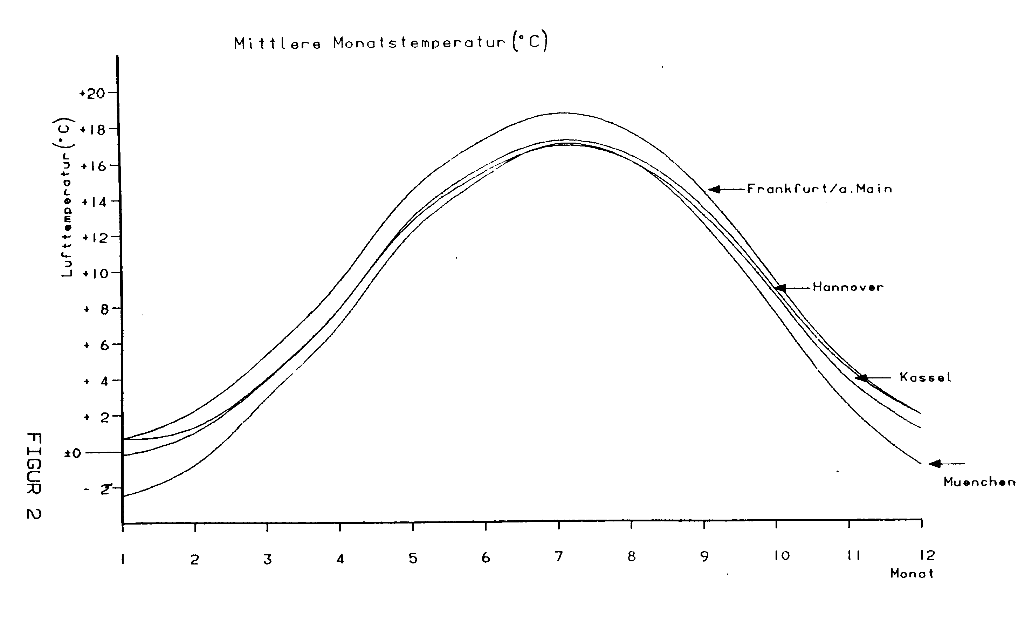

Fig. 2 zeigt den Verlauf der Lufttemperatur (mittlere Monatstemperatur) während eines Kalenderjahrs für vier verschiedene deutsche Städte (Frankfurt am Main, Hannover, Kassel und München). Dabei ist ersichtlich, daß die Charakteristik der mittleren Außentemperatur (Lufttemperatur) in allen Fällen im wesentlichen gleich ist und lediglich eine Verschiebung in Richtung der Temperaturachse (Ordinate) vorliegt.

Die bestimmten Klimazonen zugeordneten Einzelkurven der mittleren Außentemperatur in Abhängigkeit vom Kalenderdatum werden entsprechend als charakteristische mittlere Außentemperaturen gespeichert und zur Heizungs- bzw. Kühlungsregelung herangezogen.

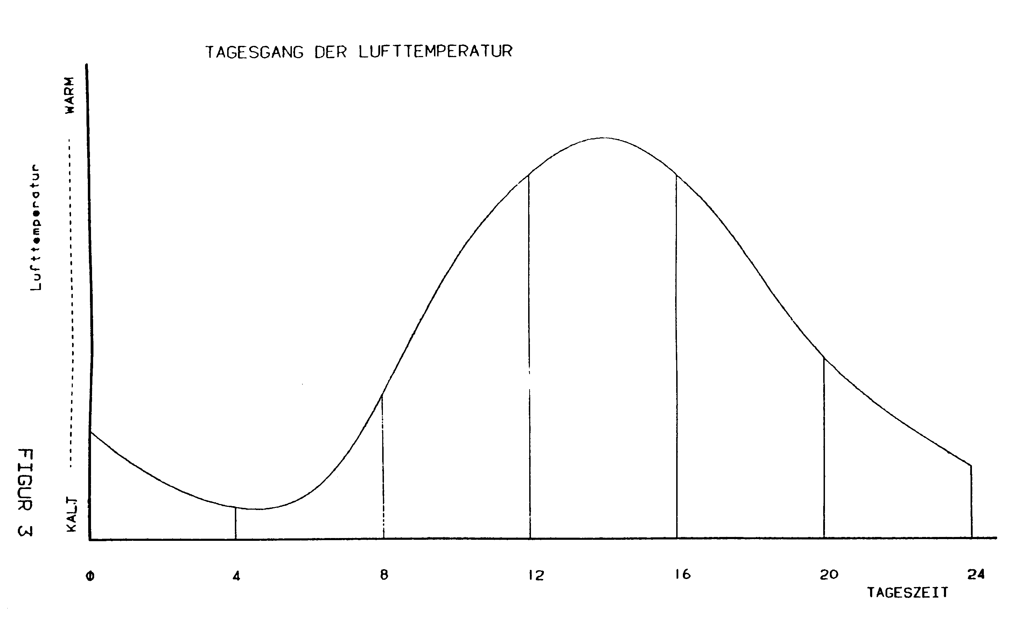

In Fig. 3 ist die Abhängigkeit der Außentemperatur (Lufttemperatur) von der Tageszeit für einen gegebenen Kalendertag schematisch dargestellt, wobei aus gesicherten meteorologischen Daten bekannt ist, daß dieser mittlere tägliche Temperaturverlauf der Außentemperatur in seiner Charakteristik praktisch unabhängig von dem jeweiligen Kalenderdatum ist und diesbezüglich lediglich eine Verschiebung in Ordinatenrichtung, d.h. zu höheren bzw. niedrigeren Temperaturen hin, vorliegt. Dies bedeutet, daß hierdurch eine einfache Korrektur des Einflusses des Tagesgangs der mittleren Außentemperatur möglich ist, da beispielsweise in der Zeit von etwa 10.00 bis etwa 16.00 h in jedem Fall mit einer Außentemperaturerhöhung zu rechnen ist, so daß beispielsweise dann, wenn die abgespeicherten Datenwerte der charakteristischen mittleren Außentemperatur auf den Zeitpunkt 10.00 h bezogen sind, eine einfache, beispielsweise additive Korrektur dieser charakteristischen mittleren Außentemperatur während der Mittagsstunden bis etwa 16.00 h möglich ist. Eine weitere Differenzierung kann noch im Hinblick auf jahreszeitliche Unterschiede sowie sogenannte meteorologische Singularitäten hin erfolgen, wie beispielsweise Schafkälte, Eisheilige etc. Die z.B. über die Charakteristik des Tagesgangs der mittleren Außentemperatur korrigierten Werte der abgespeicherten charakteristischen mittleren Außentemperatur werden zur Steuerung der Soll-Temperatur der Wärme- bzw. Kältequelle herangezogen, wobei auch die Korrekturwerte und/oder die korrigierten Werte selbst in einem nicht flüchtigen Speicher gespeichert sein können.

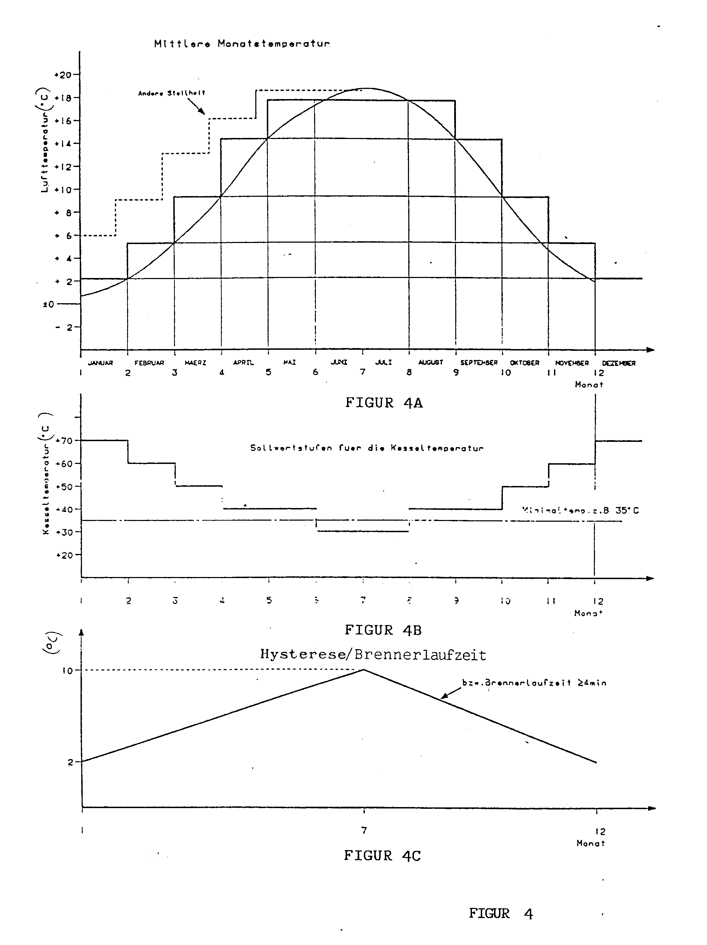

Anhand der jeweiligen Temperaturprofile werden für die einzelnen Klimazonen entsprechende Soll-Temperaturkurven festgelegt, wie schematisch aus Fig. 4 hervorgeht:
In Fig. 4A ist der Verlauf der mittleren Monatstemperatur während eines Kalenderjahrs für eine bestimmte Klimazone dargestellt, der (dicke durchgezogene Linien) durch eine Stufenkurve angenähert ist, deren Anzahl der Temperaturschritte das minimale Zeitintervall für die jeweilige Sollwertänderung der Soll-Temperatur der Wärme- bzw. Kältequelle festlegt. Hierbei erfolgt entsprechend eine schrittweise Annäherung an das Temperaturprofil der Klimazone. Die gestrichelte Stufenkurve entspricht, wie unmittelbar ersichtlich ist, einer anderen Steilheit einer solchen angenäherten Sollwertkurve, wie sie erfindungsgemäß in einem nicht flüchtigen Speicher in Form insbesondere von Wertepaaren abgespeichert wird.

Fig. 4B zeigt die Zuordnung der Temperatur einer Wärmequelle am Beispiel der Kesseltemperatur eines Heizungskessels zu dem entsprechenden Kalenderdatum unter Berücksichtigung der Sollwertkurve von Fig. 4A, wobei als Beispiel Sollwertstufen von 10°C für die Kesseltemperatur zugrundegelegt sind. Ferner ist eine Minimaltemperatur von beispielsweise 35°C angenommen.

Es ist im Rahmen der Erfindungskonzeption selbstverständlich möglich, je nach Jahreszeit bzw. Kalenderdatum auch Sollwertstufen unterschiedlicher Höhe anzuwenden, wobei die Mindest-Sollwertstufenhöhe insbesondere von den technischen und heizungstechnischen Gegebenheiten der Wärme- bzw. Kältequelle abhängt.

In Fig. 4C sind die Hysterese der Soll-Temperatur eines Heizungskessels bzw. die Brennerlaufzeit in Abhängigkeit vom Temperaturprofil einer gegebenen Klimazone schematisch dargestellt.

Wärmebedarf bzw. Wärmeabnahme sind bei einem Heiz- oder Kühlsystem je nach Jahreszeit unterschiedlich. Bei einer konstanten Hysterese ergeben sich unterschiedliche Brennerlaufzeiten, die im Extremfall so kurz sind, daß keine einwandfreie Verbrennung (= hoher Schadstoffanteil) gewährleistet ist, wobei z.B. auch ein hoher Schadstoffanteil in Brennerabgasen auftritt. Optimale Verbrennungswerte erhält man bei längeren Laufzeiten, z.B. bei Laufzeiten von mindestens 4 min. Dadurch, daß eine variable Hysterese abhängig von der Jahreszeit, d.h. vom Wärmebedarf, vorgegeben wird, erhält man auch bei geringerer Wärmeabnahme eine Brennerlaufzeit von mindestens 4 min. So ist eine optimale schadstoffarme Verbrennung sichergestellt.

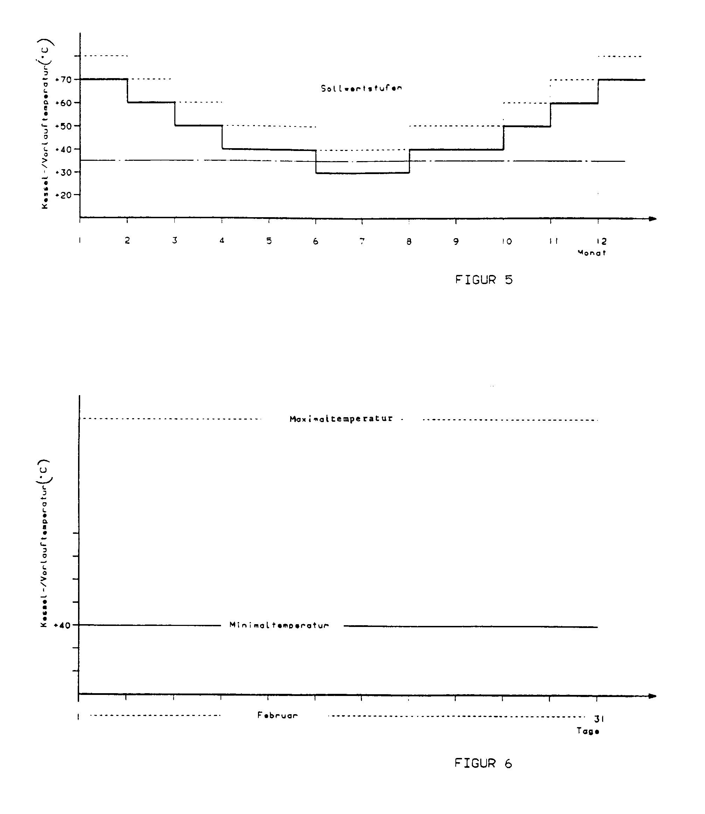

Wie oben erwähnt, ist ein Raumtemperatursensor aufgrund der Erfindungskonzeption nicht zwingend erforderlich. Wenn andererseits ein Raumtemperatursensor vorgesehen ist, wird hierdurch eine zusätzliche Korrektur der der Steuerung der Soll-Temperatur der Wärme- bzw. Kältequelle zugrundegelegten Werte der theoretischen mittleren Außentemperatur ermöglicht, wie schematisch in Fig. 5 für das Beispiel der Kessel- bzw. Vorlauftemperatur eines Zentralheizungssystems dargestellt ist.

Die gestrichelte Stufenkurve entspricht der maximalen Temperaturerhöhung, die durch das Ausgangssignal eines Raumtemperatursensors hervorgerufen wird. Die Korrektur des Sollwerts nach unten ist andererseits beliebig, wobei die Minimaltemperatur beispielsweise wiederum 35 °C beträgt.

In Fig. 6 ist der vereinfachte und für die Praxis zugleich durchaus ausreichende Fall dargestellt, daß für einen gegebenen Kalendermonat (Februar) ein gleichbleibender Sollwert für die Temperatur einer Wärmequelle (Beispiel Kesseltemperatur eines Heizungskessels bzw. entsprechende Vorlauftemperatur) vorgegeben wird, wobei die untere, durchgezogene Linie bei +40 °C der Minimaltemperatur und die obere, gestrichelte Linie andererseits den Maximalwert der Soll-Temperatur der Wärmequelle aufgrund einer Korrektur über einen Raumtemperatursensor entsprechen.

Im Rahmen der Erfindungskonzeption ist es selbstverständlich auch möglich, innerhalb eines Monats, beispielsweise für einzelne Kalendertage innerhalb eines Kalenderjahrs, jeweils unterschiedliche charakteristische mittlere Soll-Temperaturen der Wärmequelle und/oder auch unterschiedliche Korrekturwerte hierfür vorzusehen.

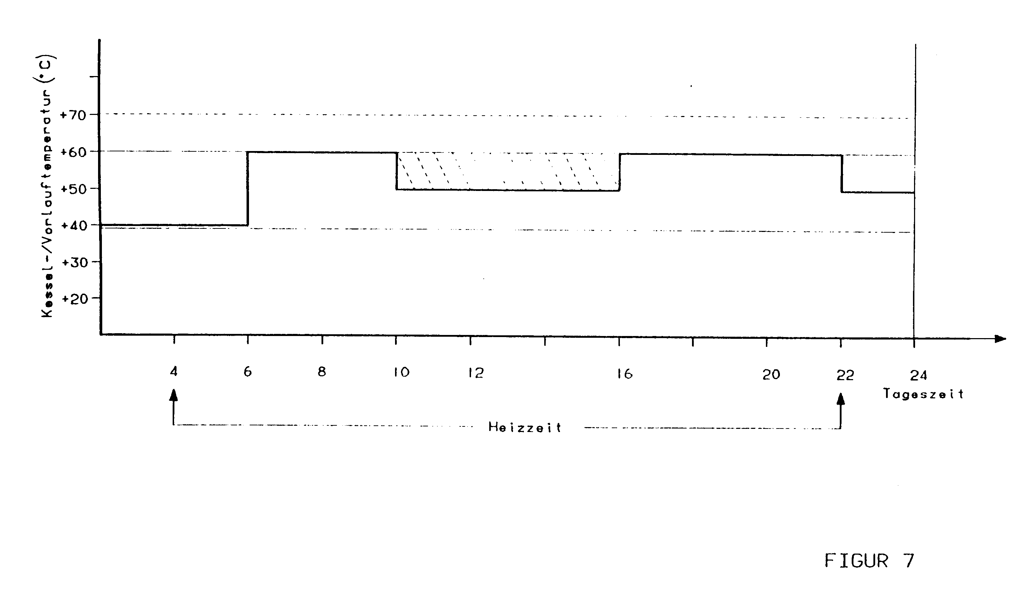

Fig. 7 zeigt schließlich den Verlauf der Temperatur der Wärmequelle (Kesseltemperatur bzw. Vorlauftemperatur) während eines bestimmten Tages, wobei zwischen 6.00 h morgens und 10.00 h vormittags der normale Tagesbetrieb und zwischen 10.00 h und 16.00 h, wie oben erläutert, aufgrund des Tagesgangs der mittleren Lufttemperatur ein temperaturmäßig reduzierter Betrieb vorliegen, der ab 16.00 h bis 22.00 h wieder in den normalen Tagbetrieb übergeht, worauf sich dann zwischen 22.00 h und 6.00 h morgens der Nachtabsenkungsbetrieb anschließt. Der Bereich des aufgrund des Tagesgangs der Außentemperatur reduzierten Betriebs bei niedrigerer Temperatur ist schraffiert dargestellt.

Die Erfindungskonzeption bezieht sich allgemein auf die Vorgabe einer Soll-Temperatur für eine Wärme- oder Kältequelle, die auf der Basis einer gespeicherten Information vorgenommen wird, die ihrerseits auf einer von meteorologischen Daten abgeleiteten charakteristischen mittleren Außentemperatur beruht; die gespeicherte Information wird vorzugsweise nach dem tatsächlichen Wärme- bzw. Kältebedarf des Systems korrigiert, wobei die erhaltenen korrigierten Außentemperaturwerte praktisch den tatsächlich herrschenden Außentemperaturen entsprechen, ohne daß hierbei ein Außentemperatursensor erforderlich ist.

Im Rahmen der Erfindungskonzeption kommen als Wärmequellen nicht nur Heizungskessel mit Gas- oder Ölbrenner oder mit festen Brennstoffen befeuerte Heizungskessel in Frage, sondern auch alternativ oder zusätzlich bei Zentralheizungssystemen mit Drei- oder Vierwegemischer, die über den Mischerantrieb gesteuert werden, das System Heizungskessel/Mischventil, das dann die eigentliche Wärmequelle darstellt.

Weitere geeignete Wärmequellen sind als Wärmeaustauscher ausgebildete Verflüssiger von Wärmepumpen oder Wärmepumpanlagen, wobei die Regelung über die Drehzahl oder die Betriebsdauer des Kompressors und/oder ein im Verflüssigerkreis vorgesehenes Regelventil und/oder den heiz- und/oder kühlseitigen Durchsatz des Wärmeträgermediums im oder am Wärmeaustauscher und/oder durch Zu- oder Abschalten von Einheiten vorgenommen wird.

Eine andere geeignete Wärmequelle, deren Temperatur geregelt wird, stellt der Wärmespeicher einer Elektrospeicherheizung dar, wobei die Regelung über den Durchsatz des Wärmeträgermediums oder die Betriebsdauer bei intermittierendem Durchsatz des Wärmeträgermediums vorgenommen wird.

Wärmequellen, deren Temperatur geregelt wird, können ferner elektrische Heizwiderstände sein, wobei die Regelung über die elektrische Heizleistung, insbesondere durch Thyristorsteuerung, und/oder den Durchsatz des Wärmeträgermediums und/oder die Einschaltdauer vorgenommen wird, sowie auch Wärmespeicher auf der Basis einer Speicherflüssigkeit, einer Stein- oder Keramikschüttung oder einer Salzlösung, wobei die Regelung über den Durchsatz des Wärmeträgermediums, ggfs. in einem Wärmeaustauscher, und/oder über die Betriebsdauer bei intermittierendem Durchsatz des Wärmeträgermediums vorgenommen wird.

Erfindungsgemäß geeignete Kältequellen, d.h. Wärme verbrauchende bzw. einem Wärmeträgermedium Wärme entziehende Einrichtungen, sind beispielsweise insbesondere als Wärmeaustauscher ausgebildete Verdampfer von Kompressions- oder Absorptionskältemaschinen, wobei die Regelung im Fall der Kompressionskältemaschinen über die Drehzahl oder die Betriebsdauer des Kompressors und/oder ein im Verdampferkreis vorgesehenes Regelventil und/oder den heiz- und/oder kühlseitigen Durchsatz des Wärmeträgermediums im oder am Wärmeaustauscher und/oder durch Zu- oder Abschalten von Einheiten und im Fall der Absorptionskältemaschinen über die Kocherleistung und/oder ein im Verdampferkreis vorgesehenes Regelventil und/oder ein im Absorberkreis vorgesehenes Regelventil und/oder den heiz- und/oder kühlseitigen Durchsatz des Wärmeträgermediums im oder am Wärmeaustauscher vorgenommen wird.

Andere geeignete Kältequellen, deren Temperatur geregelt wird, sind beispielsweise als Wärmeaustauscher ausgebildete oder mit einem Wärmeaustauscher verbundene Peltier-Elemente, wobei die Regelung über die elektrische Leistung und/ oder den heizseitigen und/oder den kühlseitigen Durchsatz des Wärmeträgermediums am betreffenden Wärmeaustauscher und/oder die Betriebsdauer bei intermittierendem Betrieb vorgenommen wird, ferner auch übliche Kältespeicher, wobei die Regelung über den Durchsatz des Wärmeträgermediums, ggfs. in einem Wärmeaustauscher, und/oder die Betriebsdauer bei intermittierendem Durchsatz des Wärmeträgermediums vorgenommen wird.

Fluide Wärmeträgermedien sind insbesondere Wasser, organische Lösungsmittel, höhersiedende Kohlenwasserstoffe, wäßrige und/oder organische Lösungen von Gefrierschutzmitteln und/oder Korrosionsschutzmitteln, Gase und Gasgemische, wie Luft, Ammoniakgas, Kohlendioxid sowie fluorierte und perfluorierte Kohlenwasserstoffe, insbesondere Frigene und Freone.

Die Korrektur der im nicht flüchtigen Speicher abgespeicherten Datenwerte der charakteristischen mittleren Außentemperatur kann additiv, multiplikativ, nach einem exponentiellen Verfahren sowie insbesondere anhand von ebenfalls gespeicherten Korrekturwerten bzw. Kurvenscharen korrigiert werden, wobei die Korrekturwerte und/oder die sich daraus ergebenden korrigierten, zur Steuerung der Soll-Temperatur der Wärmequelle herangezogenen Temperaturwerte selbst in einem nicht flüchtigen Speicher gespeichert werden können.

Nachdem die wahre Außentemperatur nicht exakt der gespeicherten charakteristischen mittleren Außentemperatur entspricht, ist eine Korrektur der zur Steuerung der Soll-Temperatur der Wärme- bzw. Kältequelle herangezogenen abgespeicherten charakteristischen mittleren Außentemperatur bzw. der sich daraus ergebenden Soll-Temperatur möglich, die über den zeitlichen Temperaturgradienten der Wärme- bzw. Kältequelle, d.h. ihre Aufheiz- bzw. Abkühlgeschwindigkeit, vorgenommen wird, da diese dem Wärme- bzw. Kältebedarf des betreffenden Systems entsprechen, also eine Korrektur der charakteristischen mittleren Außentemperaturwerte aufgrund eines Parameters, der in direkter Relation zur tatsächlich herrschenden Außentemperatur steht, da der Wärme- oder Kältebedarf eines Heizungs- bzw. Klimatisierungssystems bei gegebenen baulichen Verhältnissen insbesondere von der herrschenden Außentemperatur abhängt. Nachdem andererseits der Regler in den meisten Fällen unmittelbar an der Wärme- bzw. Kältequelle selbst, insbesondere einem Heizungskessel, angebracht ist, und deren Temperatur ohnehin mit einem Temperatursensor erfaßt wird, steht die Information der Aufheiz- bzw. Abkühlgeschwindigkeit als zeitlicher Temperaturgradient als Eingangsvariable zur Verfügung.

Auf diese Weise wird das Problem gelöst, daß an manchen Kalendertagen die charakteristische mittlere Außentemperatur mit der tatsächlich herrschenden Außentemperatur nicht übereinstimmt, da gleichwohl eine Soll-Temperatur der Wärme- bzw. Kältequelle errechnet wird, die den tatsächlich herrschenden Temperaturgegebenheiten entspricht.

Im Fall von Wärmequellen kann anstelle der Aufheizgeschwindigkeit eines Heizungskessel selbst auch, bei mit einer bestimmten, ausreichenden Temperatur betriebenem Heizungskessel, die Vorlauftemperatur des Heizungssystems nach einem manuell oder elektronisch betätigten Drei- oder Vierwege-Mischventil als Information über den Wärmebedarf des Heizungssystems herangezogen werden, die auch, wenn sich das Heizungssystem in einem quasistationären Zustand befindet, über die Stellung des Mischventils oder auch von Thermostatventilen erfaßt werden kann, beispielsweise über ein daran vorgesehenes Potentiometer.

Ebenso kann der Wärmebedarf eines Heizungssystems auch über den Durchsatz des Wärmeträgermediums erfaßt werden.

Im Fall von Kältequellen wird ebenfalls vorzugsweise die Abkühl- bzw. Kühlgeschwindigkeit der Kältequelle direkt über einen Temperatursensor erfaßt. Alternativ dazu kann die Kühlrate auch über die Stellung oder das Tastverhältnis von Regelventilen, die Drehzahl von Kompressoren bzw. Kompressorantrieben oder den Durchsatz des Wärmeträgermediums sowie im Fall von Peltier-Elementen auch über den Betriebsstrom erfaßt werden.

In allen Fällen wird so eine sogar physikalisch sinnvolle Korrekturgröße für die charakteristische mittlere Außentemperatur bzw. die sich daraus ergebende Soll-Temperatur der Wärme- bzw. Kältequelle erhalten, die eine Anpassung des betreffenden Systems an die wahren Außentemperaturen ermöglicht.

Innerhalb einiger Zeitperioden eines Kalenderjahrs treten sogenannte klimatische bzw.meteorologische Singularitäten auf, wie beispielsweise die sogenannte Schafkälte oder die sogenannten Eisheiligen; auch diese Singularitäten können in Form entsprechender Korrekturwerte für die charakteristische mittlere Außentemperatur des betreffenden Zeitintervalls abgespeichert und zur Steuerung der Soll-Temperatur der Wärme- bzw. Kältequelle herangezogen werden.

Die Abspeicherung der Datenwerte der charakteristischen mittleren Außentemperatur sowie gegebenenfalls auch der Korrekturwerte bzw. von korrigierten Werten der charakteristischen mittleren Außentemperatur bzw. Soll-Temperaturen kann im Rahmen der Erfindung auf zahlreiche verschiedene Arten erfolgen, beispielsweise mechanisch, insbesondere in Form von mit Synchron- bzw. Uhrantrieb versehenen und mechanisch, optisch oder elektronisch abtastbaren Kurvenscheiben für die betreffenden Klimazonen, oder durch konventionelle diskrete elektronische Analog- und Digitalschaltungen, mit denen quasi ein Mikrocomputer nachgebildet wird. Besonders günstig ist im Fall mikroprozessorgesteuerter Systeme die Speicherung der Temperatur- und Korrekturdaten in digitaler Form in nicht flüchtigen elektronischen, optischen oder magnetischen Speichern, günstigerweise in ROMs, PROMs, EPROMs oder EEPROMs, wobei es zugleich vorteilhaft ist, Datenkombinationen in sog. Kennfeldern abzuspeichern, da das Auslesen der entsprechenen Werte im Vergleich mit einer jeweiligen Berechnung von Werten mit sehr kurzen Zugriffszeiten möglich ist. Der Einsatz von kundenspezifischen Bausteinen, besonders von Gate-Arrays, ist ebenfalls in vielen Fällen vorteilhaft. Die Kennfelder sind dabei zwei- oder mehrdimensional und insbesondere dreidimensional, wobei die dritte Dimension den betreffenden Klimazonen zugeordnet ist.

Der nicht flüchtige Speicher ist ferner günstigerweise leicht auswechselbar oder in einer auswechselbaren Einheit, besonders einem entsprechenden steckbaren Modul, vorgesehen. Alternativ kann auch eine entsprechende, Klimazonen zugeordnete Codierung des Speichers bzw. im Speicher vorgesehen sein, aufgrund deren auf bestimmte Klimazonen bezogene Datenwerte ausgelesen werden können und eine leichte Anpassung entsprechender Vorrichtungen an den Einsatzort möglich ist.

Nachden die thermische Leistung von Brennern in Heizungskesseln grundsätzlich etwa konstant ist, was auch im Fall elektrisch beheizter Heizungskessel oder für Elektroheizungen gilt, erfolgt die Regelung der Temperatur dieser Wärmequelle für eine gegebene Soll-Temperatur in herkömmlicher Weise über die Betriebsdauer des entsprechenden Brenners. Im Fall von mit festen Brennstoffen befeuerten Heizungskesseln wird die Temperaturregelung beispielsweise über die Luftzufuhr vorgenommen.

Bei Brauchwasserbereitung muß andererseits die Soll-Temperatur eines Heizungskessels ausreichend oberhalb der Soll-Temperatur des Brauchwasserspeichers liegen, üblicherweise bei etwa 70 °C. Bei Brauchwasseranforderung wird entsprechend erfindungsgemäß entweder die Steuerung der Soll-Temperatur der Wärmequelle aufgrund der charakteristischen mittleren Außentemperatur abgeschaltet und die Soll-Temperatur der Wärmequelle auf einen vorgegebenen festen Wert, beispielsweise 70 °C, eingestellt, bzw. die sich aufgrund der charakteristischen mittleren Außentemperatur ergebende Soll-Temperatur der Wärmequelle so korrigiert, daß die vorgegebene Brauchwassertemperatur im Brauchwasserspeicher erreicht wird.

Analoges gilt für den Nachtabsenkungs- und Frostschutzbetrieb, wobei in diesem Fall die Soll-Temperatur der Wärmequelle nicht nach oben, sondern zu niedrigeren Temperaturwerten hin korrigiert bzw. auf einen niedrigeren Wert eingestellt wird.

Die Ist-Temperatur einer Wärme- bzw. Kältequelle zeigt gegenüber der Soll-Temperatur eine vom jeweiligen konkreten Heizkesselsystem abhängige zeitliche Hysterese. Dementsprechend kann erfindungsgemäß die Steuerung der Soll-Temperatur der Wärme- bzw. Kältequelle mit einer entsprechenden zeitlichen Vorverschiebung zum Ausgleich der Hysterese vorgenommen werden.

Die Mindest-Zeitintervalle zwischen den Abfragezeitpunkten der charakteristischen mittleren Außentemperatur werden vorzugsweise, wie oben anhand der Fig. 4 und 5 erläutert, aufgrund der Stufen der Soll-Temperatur der Wärmequelle festgelegt, jedoch können die Abfragezeitpunkte auch regelmäßige, konstante Zeitabstände aufweisen, vorzugsweise mit sehr kurzen Zeitintervallen, wobei dann jeweils von der Auswertelogik ermittelt wird, ob zu dem vorliegenden Abfragezeitpunkt eine für eine Änderung der Soll-Temperatur der Wärmequelle ausreichende Temperaturdifferenz bei der Wärmequelle vorliegt.

Die Zeitintervalle zwischen den Abfragezeitpunkten der charakteristischen mittleren Außentemperatur müssen ferner auch nicht während eines ganzen Kalenderjahres gleichbleibend und konstant sein, sondern können innerhalb bestimmter Zeitperioden eines Kalenderjahrs unterschiedliche konstante Werte besitzen.

Besonders vorteilhaft ist erfindungsgemäß die Verwendung eines "lernenden" Mikrocomputersystems, das aufgrund eines Lernprogramms die sich nach der Korrektur ergebenden korrigierten Werte der charakteristischen mittleren Außentemperatur bzw. der effektiven Soll-Temperatur der Wärmequelle für sämtliche Tage eines Kalenderjahrs in einem nicht flüchtigen Speicher abspeichert und diese aktualisierten Werte für den nächsten Betriebszyklus, insbesondere das folgende Kalenderjahr, verwendet.

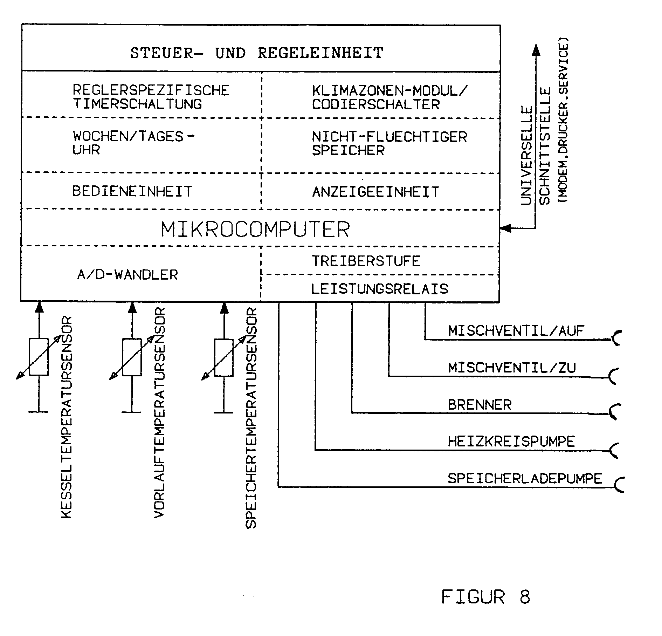

In Fig. 8 ist eine Ausführungsform einer erfindungsgemäßen Steuer- und Regeleinheit für das Beispiel einer Heizungsregelung dargestellt, die als Kompaktgerät konzipiert ist und vorzugsweise an oder in der Nähe der Wärmequelle vorgesehen wird. Die Steuer- und Regeleinheit umfaßt als wesentlichste Komponente einen Mikrocomputer mit einer zentralen Recheneinheit (CPU), einem Schreib/Lese-Speicher (RAM) und einem nicht flüchtigen Speicher, in dem insbesondere Kalenderdaten und gegebenenfalls auch Tageszeiten zugeordnete charakteristische mittlere Außentemperaturen für eine oder mehrere Klimazonen und gegebenenfalls Korrekturwerte für die charakteristischen mittleren Außentemperaturen und gegebenenfalls korrigierte Werte der charakteristischen mittleren Außentemperaturen, ferner Tag/Nacht- und Frostschutz-Temperatur-Sollwerte sowie Eichwerte der Reglerparameter gespeichert sind, da bei dieser Ausführungsform der Mikrocomputer neben der Sollwert-Vorgabe auch die Regelung der Wärmequelle übernimmt.

Der Mikrocomputer führt insbesondere die oben erläuterten und in den Ansprüchen 8 bis 14 angegebenen Operationen durch, d.h. besonders
- Verarbeitung der Eingabedaten,
- Ermittlung der Soll-Temperatur der Wärmequelle bzw. der Wärmeträgerflüssigkeit im Heizkreis in Abhängigkeit von dem jeweiligen Kalenderdatum und gegebenenfalls zusätzlich der jeweiligen Tageszeit zugeordneten charakteristischen mittleren Außentemperaturen der betreffenden Klimazone zu bestimmten, vorgegebenen Abfragezeitpunkten,
- Korrektur der aufgrund der charakteristischen mittleren Außentemperatur für gegebene Abfragezeitpunkte erhaltene Soll-Temperatur der Wärmequelle und
- Steuerung des Reglers der Wärmequelle, gegebenenfalls nach Datenwandlung.

Die Steuer- und Regeleinheit weist ferner eine reglerspezifische Timerschaltung auf, die Abfragezeitpunkte für die charakteristische mittlere Außentemperatur und ggfs. Korrekturwerte hierfür sowie die Berechnung der am Regler einzustellenden Soll-Temperatur der Wärmequelle vorgibt. Wesentliches Element der Steuer- und Regeleinheit ist ein Klimazonen-Modul, der einen nicht flüchtigen Speicher enthält oder zur Ansteuerung eines Teilbereichs des nicht flüchtigen Speichers des Mikrocomputers ausgelegt ist, in dem Kalendertagen und gegebenenfalls Tageszeiten zugeordnete Werte der charakteristischen mittleren Außentemperatur oder theoretische Sollwert-Temperaturen der Wärmequelle für bestimmte vorgegebene Klimazonen abgespeichert sind. Der Klimazonen-Modul ist ferner vorzugsweise auch so ausgelegt, daß er die Zeitintervalle für die jeweiligen Abfragezeitpunkte der Änderung der Soll-Temperatur der Wärmequelle initialisiert.

Der Klimazonen-Modul ist günstigerweise auswechselbar bzw. steckbar ausgebildet, so daß es möglich ist, die erfindungsgemäße Vorrichtung durch einfaches Auswechseln des Klimazonen-Moduls an die Klimazone des Betriebsorts anzupassen, ohne daß zusätzlich irgendwelche Eich- oder Einstellarbeiten erforderlich sind.

Alternativ kann auch ein Codierschalter vorgesehen sein, mit dem zur Klimazonen-Auswahl bestimmte Adressen im nicht flüchtigen Speicher angewählt werden können.

Über einen A/D-Wandler werden der Steuer- und Regeleinheit bzw. dem Mikrocomputer Ausgangssignale von einem Kesseltemperatursensor, einem Vorlauftemperatursensor und einem Speichertemperatursensor zugeführt. Der Mikrocomputer weist ferner eine universelle Schnittstelle auf, über die ein Datenaustausch mit einer externen Datenquelle, z.B. über ein Modem, der Anschluß eines Druckers oder von Service- und Diagnosegeräten möglich sind. Die Steuer- und Regeleinheit umfaßt weiter eine Treiberstufe und Leistungsrelais zur Ansteuerung des Mischventils, des Brenners, der Heizkreispumpe sowie einer Speicherladepumpe.

Die Vorrichtung von Fig. 8 weist daneben eine Bedieneinheit mit einer Tages- oder Wochen-Schaltuhr auf, der über übliche Eingabemittel, wie Tasten, Tastenfelder oder ein Keyboard, Einstellwerte für die Regelung eingegeben werden können, beispielsweise zur Betriebsart der Heizungsanlage, wie Frostschutz, Tag- und Nacht-Betrieb, Brauchwasserbereitung zur Anhebung und Absenkung der Temperatur für vorgegebene Zeiten, zur Abfrage der Speichertemperatur, der Temperatur der Wärmequelle und der Raumtemperatur, zur Auswahl der jeweiligen Klimazone und zur Programmierung der Tages- oder Wochen-Schaltuhr.

Die Vorrichtung von Fig. 8 besitzt ferner eine Anzeigeeinheit, mit deren Display charakteristische Betriebswerte, insbesondere die Betriebsart der Heizungsanlage, die Temperatur der Wärmequelle, die Speichertemperatur, die Raumtemperatur, eine Störung im Betrieb der Wärmequelle, wie eine Brennerstörung, eine Fehlerdiagnose, die Uhrzeit und der Wochentag, simultan, sequentiell oder einzeln wählbar angezeigt werden können. Die in Fig. 8 dargestellte Kompaktvorrichtung ist zugleich Steuervorrichtung für die Vorgabe der Soll-Temperatur der Wärmequelle und Regler, wobei auch die Reglerfunktion vom Mikrocomputer ausgeführt wird, und vorzugsweise eine frei wählbare Reglercharakteristik gegeben ist.

Der Mikrocomputer der Steuer- und Regeleinheit von Fig. 8 ist ferner vorzugsweise so ausgelegt, daß er eine wählbare Änderung der Steilheit und der absoluten Temperaturlage des Temperaturprofils der Abhängigkeit der Soll-Temperatur der Wärmequelle von der charakteristischen mittleren Außentemperatur in Abhängigkeit von manueller Eingabe oder eingelesenen, durch Datentransfer übermittelten oder gespeicherten Korrekturwerten erlaubt.

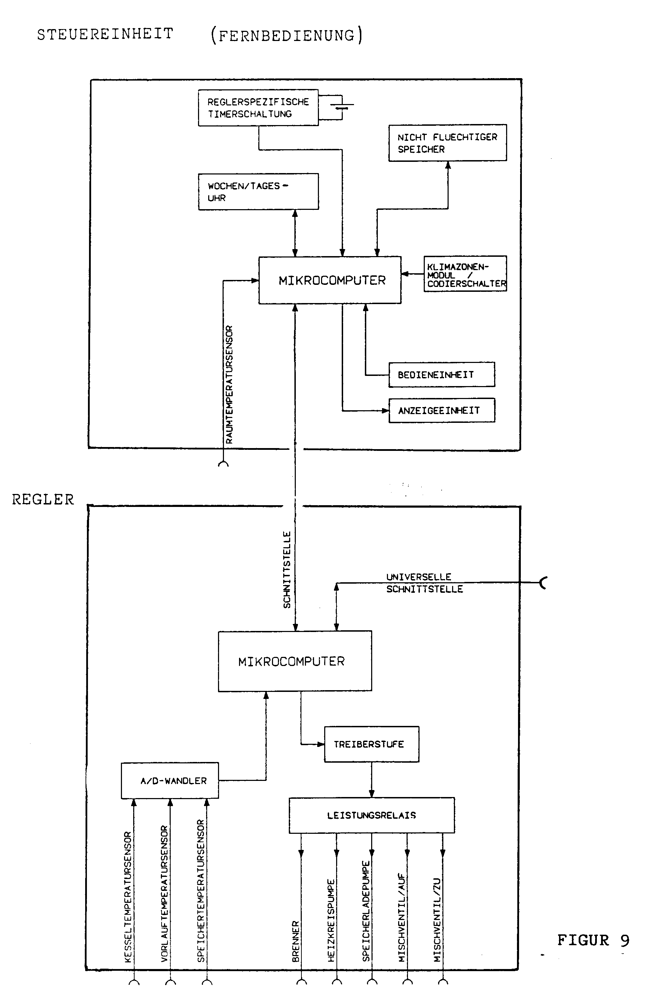

In Fig. 9 ist eine weitere bevorzugte Ausführungsform einer erfindungsgemäßen Vorrichtung schematisch dargestellt, die sich von der Vorrichtung von Fig. 8 im wesentlichen darin unterscheidet, daß die Funktionen der Ermittlung und Vorgabe der Soll-Temperatur der Wärmequelle und der eigentlichen Regelung in getrennten Vorrichtungskomponenten durchgeführt werden, nämlich in einer Steuereinheit und in einem davon getrennten Regler. Beide Komponenten sind mit einem Mikrocomputer ausgerüstet, also 'intelligent', und stehen über eine interne Schnittstelle miteinander in Datenverbindung.

Die Steuereinheit ist mit einer Fernbedienung kombiniert, da sie nicht notwendig an oder in der Nähe der Wärmequelle vorgesehen sein muß.

Die Steuereinheit umfaßt wie im Fall der Vorrichtung von Fig. 8 einen Mikrocomputer mit nicht flüchtigem Speicher, einen vorzugsweise austauschbaren Klimazonen-Modul oder einen entsprechenden Codierschalter, mit dem eine Adressenzuordnung bezüglich verschiedener Klimazonen in einem nicht flüchtigen Speicher ermöglicht wird, eine reglerspezifische Timerschaltung sowie einen A/D-Wandler, dem das Ausgangssignal eines Raumtemperatursensors zugeführt wird. Der Raumtemperatursensor ermöglicht, wie oben erläutert, eine zusätzliche Korrektur der charakteristischen mittleren Außentemperaturen. Über die interne Schnittstelle, die vorzugsweise eine Zwei-Draht-Schnittstelle ist, werden insbesondere die aktuelle Ist- und Soll-Temperatur der Wärmequelle sowie Informationen über entsprechende Störungen, beispielsweise eine Brennerstörung, sowie ggfs. Daten über die Ist- und Soll-Temperatur eines Brauchwasserspeichers ausgetauscht.

Da die Steuereinheit mit einem Raumtemperatursensor verbunden ist, kann der Mikrocomputer aufgrund des Ausgangssignals des Raumtemperatursensors eine Korrektur der aus dem Temperaturprofil der Abhängigkeit der Soll-Temperatur der Wärmequelle von der charakteristischen mittleren Außentemperatur ausgelesenen Werte der Soll-Temperatur der Wärmequelle vornehmen.

Die Steuereinheit wird vorzugsweise über die interne Schnittstelle vom Regler mit Spannung versorgt. Die Spannungsversorgung kann jedoch auch, wie im in Fig. 9 dargestellten Fall, unabhängig erfolgen. Der Mikrocomputer der Steuereinheit führt, bis auf die Reglerfunktion und die Bedienung der universellen Schnittstelle, gleichartige Operationen wie der Mikrocomputer der Vorrichtung von Fig. 8 aus.

Der Mikrocomputer der Steuereinheit ist ferner vorzugsweise softwaremäßig so ausgelegt, daß er die Aufheizgeschwindigkeit der Wärmequelle über die Ausgangssignale des Kesseltemperatursensors ermittelt und durch direkte Korrektur oder Auslesen entsprechender, in einem nicht flüchtigen Speicher abgespeicherter Korrekturwerte die sich aus der charakteristischen mittleren Außentemperatur ergebende Soll-Temperatur der Wärmequelle entsprechend korrigiert.

Die Steuereinheit umfaßt ferner eine Tages- oder Wochen-Schaltuhr sowie Bedieneinheit sowie eine Anzeigeeinheit, die prinzipiell gleichen Aufbau und gleiche Funktionen wie bei der in Fig. 8 dargestellten Kompaktvorrichtung besitzen.

Der Regler der erfindungsgemäßen Vorrichtung von Fig. 9 ist üblicherweise an, in oder bei der Wärmequelle vorgesehen. Er umfaßt eine interne Schnittstelle zur Datenübertragung zwischen Regler und Steuereinheit, einen A/D-Wandler zur A/D-Wandlung der Ausgangssignale von einem Kesseltemperatursensor, einem Vorlauftemperatursensor und einem Speichertemperatursensor, einen Mikrocomputer mit einer zentralen Recheneinheit (CPU), einem Schreib/Lese-Speicher und einem nicht flüchtigen Speicher sowie eine Treiberstufe für Relais und/oder Ansteuereinrichtungen für Stellglieder, an die wiederum Relais oder Stellglieder angeschlossen sind. In dem in Fig. 9 dargestellten Fall steuert die Treiberstufe Leistungsrelais an, mit denen ein Brenner in einem Heizungskessel, eine Heizkreispumpe, eine Speicherladepumpe sowie ein Mischventil gesteuert werden.

Der Mikrocomputer des Reglers führt vorzugsweise besonders folgende Operationen durch:
Vergleich der Soll- und Ist-Temperaturen,
Ansteuerung von Relais und/oder Stellgliedern in Abhängigkeit von den Soll- und Ist-Temperaturen nach vorgegebener fester oder wählbarer Reglercharakteristik,
Bedienung der internen Schnittstelle zur Steuereinheit und
Datenwandlung für die interne Schnittstelle.

Er bedient ferner die ebenfalls vorgesehene universelle Schnittstelle, die für die Ansteuerung eines Druckers, den Anschluß eines Modems und/oder den Anschluß eines Service- bzw. Diagnosegeräts ausgelegt ist. Über diese Schnittstelle kann die erfindungsgemäße Vorrichtung auch extern gesteuert bzw. mit Daten versorgt werden, beispielsweise durch direkte Datenübertragung etwa von Wetterstationen, Satelliten, dem Herstellerwerk oder einem Servicebetrieb, wobei insbesondere im Fall der Übertragung aktueller Wetterdaten eine automatische Anpassung des Werts der Soll-Temperatur der Wärmequelle an antizyklische oder singuläre Wetterveränderungen möglich ist. Im übrigen können auch vom Anlagenbetreiber aktuelle, etwa von Wettervorhersagen stammende Temperaturwerte, beispielsweise Minimal- und Maximalwerte der Außentemperaturen für die folgenden Tage, über de Steuereinheit als Fernbedienung eingegeben werden.

Die erfindungsgemäße Vorrichtung kann ferner vorteilhaft an Rundsteueranlagen anschließbar ausgebildet sein. Nach einer günstigen Weiterbildung umfaßt die Vorrichtung gemäß der Erfindung ferner eine Einrichtung zur Aufnahme bzw. zum Empfang einer genauen Zeitinformation, insbesondere einen Empfänger für das von der Physikalisch-Technischen Bundesanstalt in Braunschweig über den Sender DC F 77 ausgestrahlte Zeitsignal, mit dem ein Timer und/oder eine Schaltuhr der erfindungsgemäßen Vorrichtung synchronisiert wird, bzw. das in das Mikroprozessorsystem als Zeitinformation eingespeist wird. Hierdurch ist nicht nur eine automatische genaue Zeitsynchronisation der Vorrichtung möglich, sondern auch eine automatische Umschaltung etwa zwischen Sommer- und Winterzeit, so daß derartige Vorrichtungen völlig autonom arbeiten und nicht einmal bei der Inbetriebnahme eine Zeiteinstellung durch eine Bedienungsperson erforderlich ist.

Die Vorrichtung kann ferner so ausgebildet bzw. programmierbar sein, daß die betreffende Heizungs- oder Kühlanlage in bestimmten, etwa von einem Stromerzeugungsunternehmen festgelegten Zeitintervallen nicht oder nur mit verringerter Leistung betrieben werden kann, was besonders bei Wärmepumpenanlagen mit Elektroantrieb von Bedeutung ist.

Auch der Mikrocomputer des Reglers der Vorrichtung von Fig.9 ist vorzugsweise so ausgelegt, daß er eine wählbare Änderung der Steilheit und der absoluten Temperaturlage des Temperaturprofils der Abhängigkeit der Soll-Temperatur der Wärmequelle von der charakteristischen mittleren Außentemperatur in Abhängigkeit von manueller Eingabe oder eingelesenen, durch Datentransfer übermittelten oder gespeicherten Korrekturwerten erlaubt.

Der Regler hat üblicherweise eine vorgegebene, feste Regelcharakteristik, kann jedoch auch so ausgelegt sein, daß er eine wählbare, veränderliche Regelcharakteristik aufweist, die ggfs. auch durch Datenübertragung von einer externen Datenquelle geändert werden kann.

Als nicht flüchtige Speicher für die Vorrichtungen gemäß der Erfindung eignen sich insbesondere ROMs, PROMs, EPROMs und/oder EEPROMs.

Im Fall einer "lernenden" erfindungsgemäßen Vorrichtung ist der Mikrocomputer der Steuereinheit softwaremäßig so ausgelegt, daß er die nach Korrektur vorliegenden effektiven Werte der Soll-Temperatur der Wärmequelle oder die Korrekturwerte in einen nicht flüchtigen Speicher übernimmt und für den nächsten Betriebszyklus, insbesondere ein Kalenderjahr, als Datenbasis verwendet. Derartige Mikrocomputersysteme können ferner auch über die universelle Schnittstelle des Reglers, vorzugsweise über Datentransfer von einer externen Datenquelle, umprogrammierbar ausgebildet sein.
Die Steuereinheit der erfindungsgemäßen Vorrichtung von Fig. 9 ist, ebenso wie der Regler vorzugsweise in Modulbauweise aufgebaut, wobei die Steuereinheit insbesondere einen Timermodul, einen Uhren- bzw. Softwaremodul, einen Mikrocomputermodul und einen Speichermodul mit einem nicht flüchtigen Speicher, ferner einen Modul für die Anzeigeeinheit und einen Modul für die Bedieneinheit aufweist.

Mit einer erfindungsgemäßen Vorrichtung ausgerüstete Heizungsanlagen können zusätzlich mit Fensterkontakten ausgerüstet sein, über die ein Öffnen von Fenstern zum Lüften erfaßt und die Wärmezufuhr entsprechend reduziert wird. Derartige Einrichtungen sind für sich aus DE-A-34 41 695 bekannt.

Im übrigen kann der Anlagenbetreiber über die Bedieneinheit individuell gewünschte Raumtemperaturen einstellen und auch entsprechende Absenkprogramme für reduzierten Betrieb vorgeben.

Die Veränderung der Tag- bzw. Nachtwerte der Soll-Temperatur der Wärme- bzw. Kältequelle hat eine Veränderung der Temperatur der Wärme- bzw. Kältequelle zur Folge, die insbesondere proportional erfolgt, wobei die jeweilige Steilheit des Temperaturprofils berücksichtigt werden kann.

Die Erfindungskonzeption bringt gegenüber herkömmlichen Verfahren und Vorrichtungen zur Temperaturregelung von Heizungs- und Kühlanlagen erhebliche Vorteile:
Dadurch, daß das Temperaturprofil der charakteristischen mittleren Außentemperatur, insbesondere für den Zeitraum eines Kalenderjahrs, unmittelbar aus einem nicht flüchtigen Speicher zur Verfügung steht, kann eine Steuerung der Soll-Temperatur der Wärme- bzw. Kältequelle auch ohne Außentemperatursensor vorgenommen werden, die aufgrund insbesondere der Korrektur über die Aufheizgeschwindigkeit der Wärmequelle bzw. die Abkühlgeschwindigkeit der Kältequelle oder analoge Korrekturparameter sehr weitgehend den realen Temperaturverhältnissen angepaßt ist. Damit ist eine erhebliche Kostenersparnis verbunden, da der Außentemperatursensor und entsprechende Leitungen entfallen. Ein weiterer Vorteil liegt in der einfachen Montage des Systems, was insbesondere bei der Altbaurenovierung zu erheblichen Kosteneinsparungen führt.

Auch ohne Außentemperatursensor wird so eine zeitproportionale Steuerung der Soll-Temperatur von Wärme- bzw. Kältequellen in Bezug auf die Außentemperatur erzielt, wobei gegenüber herkömmlichen Systemen sogar die Zeitrelation zu den zu verwendenden abgespeicherten Daten der theoretischen mittleren Außentemperatur, also die Voreilung oder Hysterese, frei gewählt werden kann.

Erfindungsgemäße Systeme sind ferner in einfacher Weise an verschiedene Klimazonen anpaßbar, da hierfür lediglich der Klimazonenmodul ausgewechselt oder die Klimazonencodierung eingegeben werden muß.

Ein weiterer Vorteil liegt darin, daß individuelle Wohn- oder Heizgewohnheiten automatisch berücksichtigt werden.

Das Gesamtsystem zeichnet sich durch einfache Installation sowie einfache Inbetriebnahme aus, was einen besonderen Vorteil darstellt, da die Erfahrung zeigt, daß Laien in der Regel große Schwierigkeiten haben, die Einstellwerte, wie etwa bestimmte auszuwählende Heizkurven, Steilheiten etc., z.B. von Heizungsregelsystemen richtig einzustellen.

Zugleich ist ein mit der erfindungsgemäßen Vorrichtung ausgerüstetes Heiz- oder Kühlsystem stets bedarfsabhängig der jeweiligen Außentemperatur- bzw. jahreszeitlichen Temperatursituation angepaßt. Durch spezielle Softwaremaßnahmen können bei der Korrektur der charakteristischen mittleren Außentemperaturen insbesondere Jahresmaxima und Jahresminima der Außentemperatur, der Tagesgang der Außentemperatur, insbesondere die Außentemperaturerhöhung durch Sonnenstand zwischen etwa 10.00 h und 16.00 h, meteorologische Singularitäten sowie die Temperaturprofile für verschiedene Klimazonen, automatisch berücksichtigt werden, ferner auch die Hysterese bzw. Brennerlaufzeit als Funktion des Temperaturprofils einer gegebenen Klimazone.

Ein weiterer Vorteil liegt in der zukunftweisenden Steuerbarkeit bzw. Ansteuerbarkeit der Vorrichtung gemäß der Erfindung von externen Datenquellen beliebiger Art, so daß z. B. eine automatische Anpassung an herrschende Außentemperaturen, antizyklische Wettersituationen und meteorologische Singularitäten ebenso möglich sind wie die ferngesteuerte Umprogrammierung und/oder Zeitsynchronisation des Systems, etwa von einer Servicezentrale aus, die kontinuierliche oder diskontinuierliche Ferndiagnose zu Überwachungs- und Servicezwecken sowie die ferngesteuerte Zeitsynchronisation etwa über das Zeitsignal der Physikalisch-Technischen Bundesanstalt in Braunschweig, wodurch beispielsweise eine manuelle Umschaltung oder Umprogrammierung beim Wechsel von Sommer- auf Winterzeit oder umgekehrt automatisch möglich ist.

Die Erfindungskonzeption ist daher im Vergleich zu herkömmlichen Verfahren und Vorrichtungen mit erheblichen technischen und wirtschaftlichen Vorteilen verbunden.

## Patentansprüche

1. Verfahren zur Temperaturregelung von zentralen und dezentralen Heizungsanlagen mit einer Wärmequelle veränderbarer und einstellbarer Temperatur, der
- über einen mit Vor- und Rücklauf der Wärmequelle verbundenen geschlossenen Kreislauf eines fluiden Wärmeträgermediums
oder
- über ein offenes Leitungssystem mit einem insbesondere gasförmigen Wärmeträgermedium
Wärme entzogen wird, die Heizkörpern, Wärmeaustauschern oder anderen zu beheizenden Objekten als Wärmeverbrauchern zugeführt wird,
durch Regelung der Temperatur der Wärmequelle nach einer Soll-Temperatur, die in Abhängigkeit von einer zeitlich veränderlichen Referenztemperatur gesteuert wird,
**dadurch gekennzeichnet,**
daß die Soll-Temperatur der Wärmequelle ohne messende Bezugnahme auf die tatsächliche Außentemperatur gemäß vorgegegebenen, bestimmten Kalenderdaten zugeordneten charakteristischen mittleren Außentemperaturen der betreffenden Klimazone, in der sich die Heizungsanlage befindet, gesteuert wird.

2. Verfahren zur Temperaturregelung von zentralen und dezentralen Kühl- und Klimaanlagen mit
- einer Kältequelle veränderbarer und einstellbarer Temperatur, der
- über einen mit Vor- und Rücklauf der Kältequelle verbundenen geschlossenen Kreislauf eines fluiden Wärmeträgermediums
oder
- über ein offenes Leitungssystem mit einem insbesondere gasförmigen Wärmeträgermedium
Wärme zugeführt wird, die Kühlern, Wärmeaustauschern oder anderen zu kühlenden Objekten als Wärmequellen zur Abkühlung entzogen wird,
durch Regelung der Temperatur der Kältequelle nach einer Soll-Temperatur, die in Abhängigkeit von einer zeitlich veränderlichen Referenztemperatur gesteuert wird,
dadurch gekennzeichnet,
daß die Soll-Temperatur der Kältequelle ohne messende Bezugnahme auf die tatsächliche Außentemperatur gemäß vorgegebenen, bestimmten Kalenderdaten zugeordneten charakteristischen mittleren Außentemperaturen der betreffenden Klimazone, in der sich die Kühlanlage befindet, gesteuert wird.

3. Verfahren nach Anspruch 1 oder 2, dadurch gekennzeichnet, daß die Soll-Temperatur der Wärme- bzw. Kältequelle gemäß vorgegebenen, bestimmten Tageszeiten der betreffenden Kalendertage zugeordneten charakteristischen mittleren Außentemperaturen gesteuert wird.

4. Verfahren nach einem der Ansprüche 1 bis 3, dadurch gekennzeichnet, daß
- die Kennlinie bzw. diskrete Einzelwerte der charakteristischen mittleren Außentemperatur und/oder
- die Kennlinie bzw. diskrete Einzelwerte der sich jeweils aufgrund der charakteristischen mittleren Außentemperatur ergebenden Soll-Temperatur der Wärme- bzw. Kältequelle
für vorgegebene Kalenderdaten eines Kalenderjahrs und ggfs. bestimmten Kalendertagen zugeordnete Tageszeiten und für eine oder mehrere Klimazonen in einem nicht flüchtigen Speicher gespeichert oder von einer externen Werte- oder Datenquelle zum Regelsystem übertragen und zur Steuerung der Soll-Temperatur der Wärme- bzw. Kältequelle aus dem Speicher ausgelesen oder direkt von der externen Werte- oder Datenquelle übernommen werden.

5. Verfahren nach einem der Ansprüche 1 bis 4, dadurch gekennzeichnet, daß die sich jeweils aufgrund der charakteristischen mittleren Außentemperatur ergebende Soll-Temperatur der Wärme- bzw. Kältequelle additiv, multiplikativ, nach einem exponentiellen Verfahren, anhand von Kennlinienscharen, einer Tabelle oder eines Kennfelds mit für jeden Abfragezeitpunkt vorliegenden diskreten Korrekturwerten oder aufgrund direkter Dateneinspeisung von einer externen Datenquelle korrigiert wird, über den sich bei der Aufheizung der Wärmequelle bzw. der Abkühlung der Kältequelle ergebenden zeitlichen Temperaturgradienten (Aufheiz- bzw. Abkühlgeschwindigkeit) oder über den anderweitig ermittelten Wärme- bzw. Kältebedarf des Systems, und der sich ergebende korrigierte Wert als Soll-Temperatur für die Wärme- bzw. Kältequelle herangezogen wird.

6. Verfahren nach Anspruch 5, dadurch gekennzeichnet, daß die Korrekturwerte für die Soll-Temperatur der Wärme- bzw. Kältequelle für sämtliche Abfragezeitpunkte eines Kalenderjahrs sowie eine oder mehrere Klimazonen in einem nicht flüchtigen oder einem flüchtigen Speicher gespeichert und daraus nach Bedarf abgerufen werden, in einem oder mehreren zwei- oder mehrdimensionalen Kennfeldern oder in einem oder mehreren ROMs, PROMs, EPROMs oder EEPROMs, oder jeweils von einer externen oder internen Datenquelle abgerufen oder von ihr in den Mikrocomputer eingelesen werden.

7. Verfahren nach einem der Ansprüche 1 bis 6, dadurch gekennzeichnet, daß die in einem nicht flüchtigen Speicher gespeicherten Daten zur charakteristischen mittleren Außentemperatur bzw. zugehörige Korrekturwerte aufgrund eines Lernprogramms mit einem 'lernenden' Mikrocomputersystem während einer vorgegebenen Zeitdauer, insbesondere im Verlauf eines Kalenderjahrs, aktualisiert werden.

8. Vorrichtung zur Durchführung des Verfahrens nach einem der Ansprüche 1 bis 7
mit einer Einrichtung zur Regelung der Temperatur der Wärme- bzw. Kältequelle nach einer veränderbaren und einstellbaren Soll-Temperatur und einer Einrichtung zur Steuerung der Soll-Temperatur der Wärme- bzw. Kältequelle in Abhängigkeit von einer zeitlich veränderlichen Referenztemperatur,
dadurch gekennzeichnet, daß
die Einrichtung zur Steuerung der Soll-Temperatur der Wärme- bzw. Kältequelle
(A) die Soll-Temperatur der Wärme- bzw. Kältequelle ohne messende Bezugnahme auf die tatsächliche Außentemperatur gemäß vorgegebenen, bestimmten Kalenderdaten zugeordneten charakteristischen mittleren Außentemperaturen der betreffenden Klimazone steuert, in der sich die Heizungs- bzw. Kühlanlage befindet,
und aufweist:
(B1)
- mindestens einen nicht flüchtigen Speicher, in dem die Kennlinien bzw. diskrete Einzelwerte der charakteristischen mittleren Außentemperatur und/oder die Kennlinien bzw. diskrete Einzelwerte der sich jeweils aufgrund der charakteristischen mittleren Außentemperatur ergebenden Soll-Temperatur der Wärme- bzw. Kältequelle und ggfs. entsprechende Korrekturwerte für die vorgegebenen Kalendertage für eine oder mehrere Klimazonen gespeichert oder speicherbar sind,
und
- eine Einrichtung zur Abfrage bzw. zum Auslesen der im nicht flüchtigen Speicher gespeicherten Kennlinien bzw. diskreten Wertepaare, die zu den vorgegebenen Abfragezeitpunkten zur Steuerung der Soll-Temperatur der Wärme- bzw. Kältequelle verwendet werden,
oder
(B2) eine Einrichtung zum Empfang oder zur Abfrage von Daten bzw. Werten der charakteristischen mittleren Außentemperatur und/oder der sich daraus ergebenden Soll-Temperatur der Wärme- bzw. Kältequelle und ggfs. entsprechender Korrekturwerte von einer externen Datenquelle oder Steuereinrichtung zur Steuerung der Soll-Temperatur der Wärme- bzw. Kältequelle.

9. Vorrichtung nach Anspruch 8, dadurch gekennzeichnet, daß in dem nicht flüchtigen Speicher der Einrichtung zur Steuerung der Soll-Temperatur der Wärme- bzw. Kältequelle die Werte der charakteristischen mittleren Außentemperatur bzw. der Soll-Temperatur der Wärme- bzw. Kältequelle und gegebenenfalls entsprechende Korrekturwerte für bestimmte Tageszeiten der betreffenden Kalendertage gespeichert oder speicherbar sind.

10. Vorrichtung nach Anspruch 8 oder 9, dadurch gekennzeichnet, daß die Einrichtung zur Steuerung der Soll-Temperatur der Wärme- bzw. Kältequelle eine Einrichtung zum Einspeichern der betreffenden Kennlinien bzw. diskreten Einzelwerte im nicht flüchtigen Speicher aufweist.

11. Vorrichtung nach einem der Ansprüche 8 bis 10, dadurch gekennzeichnet, daß die Einrichtung zum Empfang oder zur Abfrage von Daten bzw. Werten der charakteristischen mittleren Außentemperatur und/oder der sich daraus ergebenden Soll-Temperatur der Wärme- bzw. Kältequelle eine Einrichtung zur Rückmeldung von Temperatur- und/oder Einstellwerten zu einer externen Datenquelle oder Steuereinrichtung aufweist.

12. Vorrichtung nach einem der Ansprüche 8 bis 11, dadurch gekennzeichnet, daß zumindest die Einrichtung zur Steuerung der Soll-Temperatur der Wärme- bzw. Kältequelle einen Mikrocomputer mit einer zentralen Recheneinheit (CPU), einem Schreib-/Lese-Speicher (RAM), mindestens einem nicht flüchtigen Speicher und gegebenenfalls einer E/A-Schnittstelle aufweist,
und
Temperatursensoren zur Erfassung der Ist-Temperatur der Wärme- bzw. Kältequelle sowie gegebenenfalls der Wärmeverbraucher bzw. Wärmelieferanten, von Wänden und/oder von Raumluft vorgesehen sind.

13. Vorrichtung nach einem der Ansprüche 8 bis 12, gekennzeichnet durch eine Steuer- und Regeleinheit mit
(A) einem Mikrocomputer mit einer zentralen Recheneinheit (CPU), einem Schreib/Lese-Speicher (RAM) und einem nicht flüchtigen Speicher für
- Kalenderdaten sowie ggfs. Tageszeiten zugeordnete charakteristische mittlere Außentemperaturen für eine oder mehrere Klimazonen
- sowie gegebenenfalls
- Korrekturwerte für die theoretischen mittleren Außentemperaturen,
- korrigierte Werte der theoretischen mittleren Außentemperaturen,
- Soll-Temperaturen der Wärme- bzw. Kältequelle,
- Korrekturwerte der Soll-Temperaturen der Wärme- bzw. Kältequelle,
- Soll-Temperaturen für Tag-, Nacht- und Frostschutzbetrieb,
- Eichwerte von Reglerparametern
sowie
- von einer externen Datenquelle oder Steuereinrichtung abgerufene oder empfangene entsprechende Datenwerte,
der im wesentlichen folgende Operationen durchführt:
- Verarbeitung der Eingangsdaten,
- zeitgesteuerte bzw. timergesteuerte Abfrage der gespeicherten charakteristischen mittleren Außentemperaturen sowie ggfs. von Korrekturwerten oder von gespeicherten Soll-Temperaturen zu vorgegebenen Abfragezeitpunkten
oder
- Empfang bzw. Abrufen entsprechender Datenwerte von einer externen Datenquelle oder Steuereinrichtung, ggfs. unter Speicherung oder Zwischenspeicherung,
- Ermittlung der Soll-Temperatur der Wärme- bzw. Kältequelle bzw. des fluiden Wärmeträgermediums in Abhängigkeit von dem jeweiligen Kalenderdatum und gegebenenfalls zusätzlich der der jeweiligen Tageszeit zugeordneten charakteristischen mittleren Außentemperatur der betreffenden Klimazone zu bestimmten, vorgegebenen Abfragezeitpunkten,
- ggfs. Korrektur der aufgrund der charakteristischen mittleren Außentemperatur für die vorgegebenen Abfragezeitpunkte erhaltenen Soll-Temperatur der Wärme- bzw. Kältequelle,
- Steuerung des Reglers der Wärmequelle, ggfs. nach Datenwandlung,
- Vergleich der Soll- und Ist-Temperaturen,
- Ansteuerung von Relais und/oder Stellgliedern in Abhängigkeit von den Soll- und Ist-Temperaturen nach vorgegebener fester oder wählbarer Reglercharakteristik
- sowie ggfs. Bedienung einer oder mehrerer Schnittstellen und Datenwandlung,
(B) einem A/D-Wandler zur A/D-Wandlung der analogen Ausgangssignale der Temperatursensoren,
(C) Treibern für Relais und/oder Ansteuereinrichtungen für Stellglieder
und
(D) einem oder mehreren Relais und/oder Stellgliedern zur Ansteuerung der Wärmeerzeugungseinrichtung der Wärmequelle bzw. der Kälteerzeugungseinrichtung der Kältequelle, insbesondere von Brennern in Heizungskesseln, von Mischventilen, Umwälzpumpen, Regelventilen und/oder Speicher-Ladepumpen.

14. Vorrichtung nach einem der Ansprüche 8 bis 13 mit
- einer Wärme- oder Kältequelle veränderbarer und einstellbarer Temperatur, der
über einen mit Vor- und Rücklauf der Wärme- bzw. Kältequelle verbundenen geschlossenen Kreislauf eines fluiden Wärmeträgermediums
oder
über ein offenes Leitungssystem mit einem insbesondere gasförmigen Wärmeträgermedium
Wärme entzogen bzw. zugeführt wird, die Heizkörpern, bzw. Kühlern, Wärmeaustauschern oder anderen zu beheizenden bzw. zu kühlenden Objekten als Wärmeverbrauchern bzw. Wärmelieferanten zugeführt bzw. zur Abkühlung entzogen wird,
- einem elektronischen Regelsystem mit einem Mikrocomputer mit einer zentralen Recheneinheit (CPU), einem Schreib-/Lese-Speicher (RAM), mindestens einem nicht flüchtigen Speicher und ggfs. einer E/A-Schnittstelle
sowie
- Temperatursensoren zur Erfassung der Ist-Temperatur der Wärme- bzw. Kältequelle sowie ggfs. von Wärmeverbrauchern bzw. zu kühlenden Objekten, von Wänden und/oder von Raumluft,
gekennzeichnet durch
(A) eine vorzugsweise unabhängig von der Wärme- bzw. Kältequelle vorgesehene Steuereinheit mit
(A1) einem Mikrocomputer mit einer zentralen Recheneinheit (CPU), einem Schreib/Lese-Speicher (RAM) und einem nicht flüchtigen Speicher für
- Kalenderdaten sowie ggfs. Tageszeiten zugeordnete charakteristische mittlere Außentemperaturen für eine oder mehrere Klimazonen
- sowie gegebenenfalls
- Korrekturwerte für die charakteristischen mittleren Außentemperaturen,
- korrigierte Werte der charakteristischen mittleren Außentemperaturen,
- Soll-Temperaturen der Wärme- bzw. Kältequelle,
- Korrekturwerte der Soll-Temperaturen der Wärme- bzw. Kältequelle,
- Soll-Temperaturen für Tag-, Nacht- und Frostschutzbetrieb,
- Eichwerte von Reglerparametern
sowie
- von einer externen Datenquelle oder Steuereinrichtung abgerufene oder empfangene entsprechende Datenwerte,
- der folgende Operationen durchführt:
- Verarbeitung der Eingabedaten,
- zeitgesteuerte bzw. timergesteuerte Abfrage der gespeicherten charakteristischen mittleren Außentemperaturen sowie ggfs. von Korrekturwerten oder von gespeicherten Soll-Temperaturen zu vorgegebenen Abfragezeitpunkten
oder
- Empfang bzw. Abrufen entsprechender Datenwerte von einer externen Datenquelle oder Steuereinrichtung, ggfs. unter Speicherung oder Zwischenspeicherung,
- Ermittlung der Soll-Temperatur der Wärme- bzw. Kältequelle bzw. des fluiden Wärmeträgermediums in Abhängigkeit von dem jeweiligen Kalenderdatum und ggfs. zusätzlich der der jeweiligen Tageszeit zugeordneten charakteristischen mittleren Außentemperatur der betreffenden Klimazone zu bestimmten, vorgegebenen Abfragezeitpunkten,
- ggfs. Korrektur der aufgrund der charakteristischen mittleren Außentemperatur für die vorgegebenen Abfragezeitpunkte erhaltenen Soll-Temperatur der Wärme- bzw. Kältequelle
und
- Steuerung des Reglers der Wärmequelle, ggfs. nach Datenwandlung sowie über eine Schnittstelle,
und
(A2) einer Schnittstelle zu einem Regler
sowie
(B) einen Regler für die Temperatur der Wärme- bzw. Kältequelle, der an, in oder bei der Wärme- bzw. Kältequelle vorgesehen ist,
mit
- einer Schnittstelle zur Datenübertragung zwischen Regler und Steuereinheit,
- einem A/D-Wandler zur A/D-Wandlung der analogen Ausgangsignale der Temperatursensoren,
- einem Mikrocomputer mit einer zentralen Recheneinheit (CPU), einem Schreib/Lese-Speicher und einem nicht flüchtigen Speicher, der folgende Operationen durchführt:
- Vergleich der Soll- und Ist-Temperaturen,
- Ansteuerung von Relais und/oder Stellgliedern in Abhängigkeit von den Soll- und Ist-Temperaturen nach vorgegebener fester oder wählbarer Reglercharakteristik,
- Bedienung der Schnittstelle zur Steuereinheit und ggfs. Datenwandlung für die Schnittstelle,
- Treibern für Relais und/oder Ansteuereinrichtungen für Stellglieder
und
- einem oder mehreren Relais und/oder Stellgliedern zur Ansteuerung der Wärmeerzeugungseinrichtung der Wärmequelle bzw. der Kälteerzeugungseinrichtung der Kältequelle, insbesondere von Brennern in Heizungskesseln, von Mischventilen, Umwälzpumpen, Regelventilen und/oder Speicher-Ladepumpen.

15. Vorrichtung nach Anspruch 14, dadurch gekennzeichnet, daß die Steuereinheit (A) einen Raumtemperatursensor, gegebenenfalls mit einem zugehörigen A/D-Wandler, aufweist und der Mikrocomputer so ausgelegt ist, daß er aufgrund des Ausgangssignals des Raumtemperaturfühlers eine Korrektur der aus dem Temperaturprofil der Abhängigkeit der Soll-Temperatur der Wärme- bzw. Kältequelle von der charakteristischen mittleren Außentemperatur ausgelesenen Werte der Soll-Temperatur der Wärme- bzw. Kältequelle vornimmt.

16. Vorrichtung nach Anspruch 14 oder 15, dadurch gekennzeichnet, daß der Mikrocomputer der Steuereinheit (A) so ausgelegt ist, daß er eine wählbare Änderung der Steilheit und der absoluten Temperaturlage des Temperaturprofils der Abhängigkeit der Soll-Temperatur der Wärme- bzw. Kältequelle von der charakteristischen mittleren Außentemperatur in Abhängigkeit von manueller Eingabe oder eingelesenen, durch Datentransfer übermittelten oder gespeicherten Korrekturwerten erlaubt.

17. Vorrichtung nach einem der Ansprüche 14 bis 16, dadurch gekennzeichnet, daß die Steuereinheit (A) einen auswechselbaren Klimazonen-Modul aufweist, der einen nicht flüchtigen Speicher enthält oder zur Ansteuerung eines Teilbereichs des nicht flüchtigen Speichers der Steuereinheit (A) ausgelegt ist, in dem Kalendertagen und gegebenenfalls Tageszeiten zugeordnete Werte der charakteristischen mittleren Außentemperatur für bestimmte vorgegebene Klimazonen abgespeichert sind.

## Claims

1. A temperature control method for central and local heating systems having
a heat source whose temperature is variable and adjustable and from which heat is removed,
either by way of a closed circuit of a fluid heat vehicle medium, such circuit being connected to the flow and return of the heat source, or
by way of an open pipe system having a more particularly gaseous heat vehicle medium,
the heat thus removed being supplied to heat consumers in the form of radiators, heat exchangers or other heat consumers in the form of articles to be heated,
by control of the heat source temperature in accordance with a set-value temperature controlled in dependence upon a reference temperature variable in time,
characterised in that
the heat source set-value temperature is controlled, without measuring reference to the actual outside temperature, in accordance with programmed characteristic average outside temperatures of the particular climatic zone where the heating system is disposed, the latter temperatures being associated with predetermined calendar dates.

2. A temperature control method for central and local cooling and air-conditioning systems having
a cold source whose temperature is variable and adjustable and to which heat is supplied,
either by way of a closed circuit of a liquid heat vehicle medium, such circuit being connected to the flow and return of the cold source, or
by way of an open pipe system having a more particularly gaseous heat vehicle medium,
the heat being removed from heat sources in the form of coolers or heat exchangers or other heat sources in the form of articles to be cooled,
by control of the cold source temperature in accordance with a set-value temperature controlled in dependence upon a reference temperature variable in time,
characterised in that
the cold source set-value temperature is controlled, without measuring reference to the actual outside temperature, in accordance with programmed characteristic average outside temperatures of the particular climatic zone where the cooling system is disposed, the latter temperatures being associated with predetermined calendar dates.

3. A method according to claim 1 or 2, characterised in that the heat or cold source set-value temperature is controlled in accordance with programmed characteristic average outside temperatures associated with predetermined times of day of the particular calendar dates concerned.

4. A method according to any of claims 1 to 3, characterised in that
the characteristic or discrete values of the characteristic average outside temperature and/or
the characteristic or discrete values of the heat or cold source set-value temperature arising by virtue of the characteristic average outside temperature
for programmed calendar dates of a calendar year and, if required, times of day associated with predetermined calendar dates and for one or more climatic zones is/are stored in a non-volatile memory or transmitted from an external value or data source to the control system and either read out from the memory or taken over directly from the external value or data source to control the heat or cold source set-value temperature.

5. A method according to any of claims 1 to 4, characterised in that the heat or cold source set-value temperature arising by virtue of the characteristic average outside temperature is corrected additively or multiplicatively or exponentially or by reference to families of characteristics or to a table or to a characteristic diagram having discrete correction values for each sampling time or on the basis of direct injection of data from an external data source, by way of the temperature gradient in time - i.e., the heating rate and cooling rate of the heat source and cold source respectively - or by way of the heat or cold demand of the system as ascertained in any other way, and the resulting corrected value is used as set-value temperature for the heat or cold source.

6. A method according to claim 5, characterised in that the correction values for the heat or cold source set-value temperature for all the sampling times of a calendar year and for one or more climatic zones are stored in a non-volatile or volatile memory or in one or more two-or-more dimensional characteristic diagrams or in one or more ROMs, PROMs, EPROMs or EEPROMs and called in therefrom as required or are called in from an external or internal data source or read therefrom into the microcomputer.

7. A method according to any of claims 1 to 6, characterised in that the data for defining the characteristic average outside temperature, and/or associated correction values, which are stored in a non-volatile memory are updated by means of a learning program comprising a "learning" microcomputer system during a programmed period, more particularly during a calendar year.

8. An apparatus for performing the method according to any of claims 1 to 7 and comprising:
means for controlling the heat or cold source temperature in accordance with a variable and adjustable set-value temperature, and means for controlling the heat or cold source set-value temperature in dependence upon a reference temperature variable in time,
characterised in that
the means for controlling the set-value temperature of the heat or cold source:
(A) controls the temperature thereof, without measuring reference to the actual outside temperature, in accordance with programmed characteristic average outside temperatures of the particular climatic zone where the heating or cooling system is disposed, the latter temperatures being associated with predetermined calendar dates,
and comprises
(B1) at least one non-volatile memory in which the characteristics or discrete values of the characteristic average outside temperatures and/or the characteristics or discrete values of the heat or cold source set-value temperature arising by virtue of the characteristic average outside temperature and, if required, corresponding correction values for the programmed calendar dates are or can be stored for one or more climatic zones, and
means for sampling or reading out the characteristics or discrete value pairs which have been stored in the non-volatile memory and which are used at the programmed sampling times to control the heat or cold source set-value temperature,
or
(B2) means for receiving or sampling data or values of the characteristic average outside temperatures and/or of the heat or cold source set-value temperature resulting therefrom and, if required, of corresponding correction values from an external data source or control facility for controlling the heat or cold source set-value temperature.

9. An apparatus according to claim 8, characterised in that the values of the characteristic outside temperature or of the heat or cold source set-value temperature and, if required, corresponding correction values for particular times of day of the particular calendar dates concerned are or can be stored in the non-volatile memory of the means for controlling the heat or cold source set-value temperature.

10. An apparatus according to claim 8 or 9, characterised in that the means for controlling the heat or cold source set-value temperature have provision for storing the particular characteristics or discrete values concerned in the non-volatile memory.

11. An apparatus according to any of claims 8 to 10, characterised in that the means for receiving or sampling data or values of the characteristic average outside temperature and/or the heat or cold source set-value temperature arising therefrom have means for reporting back temperature and/or adjustment values to an external data source or control facility.

12. An apparatus according to any of claims 8 to 11, characterised in that at least the means for controlling the heat or cold source set-value temperature comprise a microcomputer having a central processing unit (CPU), a random access memory (RAM), at least one non-volatile memory and, if required, an input/output interface,
and
temperature sensors for sensing the actual temperature of the heat or cold source and possibly of the heat consumers or heat evolvers, of walls and/or of the room atmosphere are provided.

13. An apparatus according to any of claims 8 to 12, characterised by a control unit having:
(A) a microcomputer having a central processing unit (CPU), a random access memory (RAM) and a non-volatile memory for:
calendar-date-associated and, if required, time-of-day associated characteristic average outside temperatures for one or more climatic zones
and, if required,
correction values for the theoretical average outside temperatures,
corrected values of the theoretical average outside temperatures,
heat or cold source set-value temperatures,
correction values for the heat or cold source set-value temperatures,
set-value temperatures for day, night and frost protection operation,
calibration values of controller parameters
and
corresponding data values called in or received from an external data source or control facility,
which basically performs the following operations:
processing of the input data,
timed or timer-controlled sampling of the stored characteristic average outside temperatures and, if required, of correction values or of stored set-value temperatures at programmed sampling times
or
receiving or calling in corresponding data values from an external data source or control facility, if required with storage or intermediate storage,
sensing the set-value temperature of the heat or cold source or of the fluid heat vehicle medium in dependence upon the respective calendar-date-associated and, if required, also the time-of-day-associated characteristic average outside temperature of the particular climatic zone concerned at predetermined programmed sampling times,
if required, correction of the heat or cold source set-value temperature arising by virtue of the characteristic average outside temperature for the programmed sampling times,
control of the heat source controller, possibly after data conversion,
comparison of the set-value and actual temperatures,
the triggering of relays and/or actuators in dependence upon the set-value and actual temperatures in accordance with programmed fixed or selectable controller characteristics,
and, if required, operation of one or more interfaces and data conversion,
(B) an analog/digital converter for analog/digital conversion of the analog output signals of the temperature sensors,
(C) drivers for relays and/or means for triggering actuators
and
(D) one or more relays and/or actuators for triggering the heat-producing means of the heat source or the cold-producing means of the cold source, more particularly burners in heating boilers, mixing valves, circulating pumps, control valves and/or storage charging pumps.

14. An apparatus according to any of claims 8 to 13 having
a heat source or cold source whose temperature is variable and adjustable and from and to which, respectively, heat is removed or supplied
either by way of a closed circuit of a fluid heat vehicle medium, such circuit being connected to the flow and return of the heat or cold source,
or
by way of an open pipe system having a more particularly gaseous heat vehicle medium,
the heat thus removed or supplied going to or from radiators or coolers, heat exchangers or other forms of heat consumers or heat deliverers to be heated or cooled or being removed for cooling,
an electronic control system having a microcomputer having a central processing unit (CPU), a random access memory (RAM), at least one non-volatile memory and possibly an input/output interface, and
temperature sensors for detecting the actual temperature of the heat source or cold source and, if required, of heat consumers or articles to be cooled, walls and/or room air,
characterised by:
(A) a control unit which is provided preferably independently of the heat or cold source and which has:
(A1) a microcomputer having a central processing unit (CPU), a random-access memory (RAM) and a non-volatile memory for:
calendar-date-associated and, if required, time-of-day-associated characteristic average outside temperatures for one or more climatic zones,
and, if required,
correction values for the characteristic average outside temperatures,
corrected values of the characteristic average outside temperatures,
set-value temperatures of the heat source or cold source,
correction values for the set-value temperatures of the heat source or cold source,
set-value temperatures for day, night and frost protection operation,
calibration values of controller parameters
and
corresponding data values called in or received from an external data source or control facility,
which performs the following operations:
processing of the input data,
timed or timed-controlled sampling of the stored characteristic average outside temperatures and, if required, of correction values or of stored set-value temperatures at programmed sampling times
or
receiving or calling in corresponding data values from an external data source or control facility, if required with storage or intermediate storage,
sensing the set-value temperature of the heat or cold source or fluid heat vehicle medium in dependence upon the particular calendar date concerned and, if required, also upon the corresponding time-of-day-associated characteristic average outside temperature of the particular climatic zone concerned at predetermined programmed sampling times,
if required, correction of the heat or cold source set-value temperature arising by virtue of the characteristic average outside temperature for the predetermined sampling times,
and
controlling the controller of the heat source, if required after data conversion and by way of an interface,
and
(A2) an interface to a controller
and
(B) a controller for the temperature of the heat or cold source, such controller being provided on or in or near the same and having:
an interface for data transmission between the controller and the control facility,
an analog/digital converter for analog/digital conversion of the analog output signals of the temperature sensors,
a microcomputer having a central processing unit (CPU), a random access memory and a non-volatile memory performing the following operations:
comparison of set-value and actual temperatures,
triggering of relays and/or actuators in dependence upon the set-value and actual temperatures in accordance with a programmed fixed or selectable controller characteristic,
operation of the interface to the control unit and, if required, data conversion for the interface,
drivers for relays and/or means for triggering actuators
and
one or more relays and/or actuators for triggering the heat-producing means of the heat source or the cold-producing means of the cold source, more particularly burners in heating boilers, mixing valves, circulating pumps, control valves and/or storage charging pumps.

15. An apparatus according to claim 14, characterised in that the control unit (A) has a room temperature sensor, if required with an associated analog/digital converter, and the microcomputer is adapted to respond to the output signal of the room temperature sensor by correcting the heat or cold source set-temperature values read out from the temperature profile of the relationship between the heat or cold source set-value temperature and the characteristic average outside temperature.

16. An apparatus according to claim 14 or 15, characterised in that the microcomputer of the control unit (A) is adapted to permit a selectable variation of the steepness and the absolute temperature position of the temperature profile of the relationship between the heat or cold source set-value temperature and the characteristic average outside temperature in dependence upon a manual input of correction values or of correction values which are read-in or transferred by data transfer or stored.

17. An apparatus according to any of claims 14 to 16, characterised in that the control unit (A) has an interchangeable climatic zone module which comprises a non-volatile memory or which is adapted to trigger a subzone of the non-volatile memory of the control unit (A) storing calendar-date-associated and, if required, time-of-day-associated values of the characteristic average outside temperature for predetermined programmed climatic zones.

## Revendications

1. Procédé de régulation de température pour installations de chauffage centrales et décentralisées comportant une source chaude de température modifiable et réglable, de laquelle de la chaleur est prélevée
- par l'intermédiaire d'un circuit fermé d'un agent caloporteur fluide relié aux conduites d'alimentation et de retour de la source chaude ou
- par l'intermédiaire d'un système de conduites ouvert comportant un agent caloporteur en particulier gazeux,
chaleur qui est envoyée à des radiateurs, des échangeurs de chaleur ou d'autres objets à chauffer qui constituent des consommateurs de chaleur,
par régulation de la température de la source chaude en fonction d'une température de consigne qui est commandée en fonction d'une température de référence variable au cours du temps,
caractérisé en ce que la température de consigne de la source chaude est commandée sans référence de mesure à la température externe réelle selon des températures externes moyennes caractéristiques de la zone climatique concernée dans laquelle se trouve l'installation de chauffage, associées à des dates civiles déterminées préétablies.

2. Procédé de régulation de température pour installations de refroidissement et de climatisation centrales et décentralisées comportant
- une source froide de température modifiable et réglable, à laquelle de la chaleur est envoyée
- par l'intermédiaire d'un circuit fermé d'un agent caloporteur fluide relié aux conduites d'alimentation et de retour de la source froide ou
- par l'intermédiaire d'un système de conduites ouvert comportant un agent caloporteur en particulier gazeux,
chaleur qui est prélevée sur des refroidisseurs, des échangeurs de chaleur ou d'autres objets à refroidir qui constituent des sources chaudes,
par régulation de la température de la source froide en fonction d'une température de consigne qui est commandée en fonction d'une température de référence variable dans le temps,
caractérisé en ce que la température de consigne de la source froide est commandée sans référence de mesure à la température externe réelle selon des températures externes moyennes caractéristiques de la zone climatique concernée dans laquelle se trouve l'installation de refroidissement, associées à des dates civiles déterminées préétablies.

3. Procédé selon la revendication 1 ou 2, caractérisé en ce que la température de consigne de la source chaude ou froide est commandée en fonction de températures externes moyennes caractéristiques associées à des heures déterminées préétablies des jours civils concernés.

4. Procédé selon l'une des revendications 1 à 3, caractérisé en ce que
- la caractéristique ou des valeurs individuelles discrètes de la température externe moyenne caractéristique et/ou
- la caractéristique ou des valeurs individuelles discrètes de la température de consigne de la source chaude ou froide qui résulte dans chaque cas de la température externe moyenne caractéristique
sont mémorisées dans une mémoire non volatile pour des dates civiles prédéterminées d'une année civile et éventuellement pour des heures associées à des dates civiles déterminées et pour une ou plusieurs zones climatiques, ou bien sont transmises au système de régulation par une source externe de valeurs ou de données et sont lues dans la mémoire pour la commande de la température de consigne de la source chaude ou froide ou bien sont reçues directement par la source externe de valeurs ou de données.

5. Procédé selon l'une des revendications 1 à 4, caractérisé en ce que la température de consigne de la source chaude ou froide qui résulte dans chaque cas de la température externe moyenne caractéristique est corrigée de manière additive, multiplicative, selon un processus exponentiel, à l'aide de familles de caractéristiques, d'une table ou d'un diagramme caractéristique avec les valeurs de correction discrètes qui existent pour chaque instant d'interrogation ou sur la base d'une introduction directe de données par une source de données externe, par l'intermédiaire des gradients de température (vitesse de chauffage ou de refroidissement) temporels qui résultent du chauffage de la source chaude ou du refroidissement de la source froide ou par l'intermédiaire des besoins en chaleur ou en froid du système qui sont déterminés d'une autre manière, et la valeur corrigée résultante est choisie comme température de consigne pour la source chaude ou froide.

6. Procédé selon la revendication 5, caractérisé en ce que les valeurs de correction pour la température de consigne de la source chaude ou froide pour la totalité des instants d'interrogation d'une année civile et pour une ou plusieurs zones climatiques sont mémorisées dans une mémoire non volatile ou volatile et en sont extraites suivant les besoins, dans un ou plusieurs diagrammes caractéristiques à deux dimensions ou à plus de deux dimensions, ou dans une ou plusieurs ROM, PROM, EPROM ou EEPROM, ou bien sont extraites dans chaque cas d'une source externe ou interne de données ou sont introduites par celle-ci dans le micro-ordinateur.

7. Procédé selon l'une des revendications 1 à 6, caractérisé en ce que les données concernant la température externe moyenne caractéristique ou les valeurs de correction associées qui sont mémorisées dans une mémoire non volatile sont actualisées par un système de micro-ordinateur "adaptatif" sur la base d'un programme adaptatif pendant une durée prédéterminée, en particulier au cours d'une année civile.

8. Dispositif pour la mise en oeuvre du procédé selon l'une des revendications 1 à 7, comportant un dispositif de régulation de la température de la source chaude ou froide d'après une température de consigne modifiable et réglable et un dispositif de commande de la température de consigne de la source chaude ou froide en fonction d'une température de référence variable au cours du temps, caractérisé en ce que le dispositif de commande de la température de consigne de la source chaude ou froide,
(A) commande la température de consigne de la source chaude ou froide sans référence de mesure à la température externe réelle, selon des températures externes moyennes caractéristiques de la zone climatique concernée dans laquelle se trouve l'installation de chauffage ou de refroidissement, associées à des dates civiles déterminées préétablies,
et présente :
(B1)
- au moins une mémoire non volatile dans laquelle sont mémorisées ou sont mémorisables les caractéristiques ou des valeurs individuelles discrètes de la température externe moyenne caractéristique et/ou les caractéristiques ou des valeurs individuelles discrètes de la température de consigne de la source chaude ou froide qui résulte de la température externe moyenne caractéristique, et éventuellement des valeurs de correction correspondantes pour les dates civiles prédéterminées, pour une ou plusieurs zones climatiques,
et
- un dispositif d'interrogation ou de lecture des caractéristiques ou paires de valeurs discrètes mémorisées dans la mémoire non volatile, qui sont utilisées aux instants d'interrogation prédéterminés pour la commande de la température de consigne de la source chaude ou froide,
ou
(B2) un dispositif pour la réception ou l'interrogation de données ou valeurs de la température externe moyenne caractéristique et/ou de la température de consigne de la source chaude ou froide qui en résulte et éventuellement de valeurs de correction correspondantes d'une source de données ou d'un dispositif de commande externe pour la commande de la température de consigne de la source chaude ou froide.

9. Dispositif selon la revendication 8, caractérisé en ce que les valeurs de la température externe moyenne caractéristique ou de la température de consigne de la source chaude ou froide et éventuellement les valeurs de correction correspondantes pour des heures déterminées des dates civiles concernées sont mémorisées ou sont mémorisables dans la mémoire non volatile du dispositif de commande de la température de consigne de la source chaude ou froide.

10. Dispositif selon la revendication 8 ou 9, caractérisé en ce que le dispositif de commande de la température de consigne de la source chaude ou froide présente un dispositif de mémorisation dans la mémoire non volatile des caractéristiques ou valeurs individuelles discrètes concernées.

11. Dispositif selon l'une des revendications 8 à 10, caractérisé en ce que le dispositif de réception ou d'interrogation des données ou valeurs de la température externe moyenne caractéristique et/ou de la température de consigne de la source chaude ou froide qui en résulte présente un dispositif de communication en retour des valeurs de température et/ou de réglage à une source de données ou un dispositif de commande externe.

12. Dispositif selon l'une des revendications 8 à 11, caractérisé en ce qu'au moins le dispositif de commande de la température de consigne de la source chaude ou froide comporte un micro-ordinateur muni d'un processeur central (CPU), d'une mémoire à lecture-écriture (RAM), d'au moins une mémoire non volatile et éventuellement d'une interface E/S,
et en ce qu'il est prévu
des capteurs de température pour capter la température effective de la source chaude ou froide et éventuellement des consommateurs de chaleur ou des fournisseurs de chaleur, des parois et/ou de l'air ambiant.

13. Dispositif selon l'une des revendications 8 à 12, caractérisé par une unité de commande et de régulation comportant :
(A) un micro-ordinateur muni d'un processeur central (CPU), d'une mémoire à lecture-écriture (RAM) et d'une mémoire non volatile pour
- des températures externes moyennes caractéristiques associées à des dates civiles et éventuellement à des heures du jour pour une ou plusieurs zones climatiques
et éventuellement
- des valeurs de correction pour les températures externes moyennes théoriques,
- des valeurs corrigées des températures externes moyennes théoriques,
- des températures de consigne de la source chaude ou froide,
- des valeurs de correction des températures de consigne de la source chaude ou froide,
- des températures de consigne pour le fonctionnement diurne, nocture et de protection contre le gel,
- des valeurs de référence de paramètres de régulation
et
- des valeurs de données correspondantes extraites ou reçues d'une source de données ou d'un dispositif de commande externe,
qui réalise essentiellement les opérations suivantes :
- traitement des données d'entrée,
- interrogation commandée dans le temps ou synchronisée des températures externes moyennes caractéristiques mémorisées et éventuellement de valeurs de correction ou de températures de consigne mémorisées, à des instants d'interrogation prédéterminés
ou
- réception ou extraction de valeurs de données correspondantes d'une source de données ou d'un dispositif de commande externe, éventuellement avec mémorisation ou mémorisation temporaire,
- détermination de la température de consigne de la source chaude ou froide ou de l'agent caloporteur fluide en fonction de la date civile individuelle et éventuellement en outre en fonction de la température externe moyenne caractéristique de la zone climatique concernée, associée à l'heure du jour correspondante, à des instants d'interrogation déterminés préétablis,
- éventuellement correction de la température de consigne de la source chaude ou froide obtenue sur la base de la température externe moyenne caractéristique pour les instants d'interrogation prédéterminés,
- commande du régulateur de la source chaude, éventuellement après conversion de données,
- comparaison des températures de consigne et effective,
- excitation de relais et/ou de composants de réglage en fonction des températures de consigne et effective d'après des caractéristiques de régulation fixes ou sélectionnables prédéterminées
- et éventuellement commande d'une ou plusieurs interfaces et d'une conversion de données,
(B) un convertisseur A/N pour la conversion A/N des signaux de sortie analogiques des capteurs de température,
(C) des circuits d'attaque pour des relais et/ou des dispositifs d'excitation pour des composants de réglage et
(D) un ou plusieurs relais et/ou composants de réglage pour l'excitation du dispositif de production de chaleur de la source chaude ou du dispositif de production de froid de la source froide, en particulier de brûleurs dans des chaudières, de régulateurs à vannes, de pompes de circulation, de vannes de régulation et/ou de pompes de chargement de réservoirs.

14. Dispositif selon l'une des revendications 8 à 13, comportant :
- une source chaude ou froide de température modifiable et réglable, de laquelle de la chaleur est prélevée ou à laquelle de la chaleur est envoyée par l'intermédiaire d'un circuit fermé d'un agent caloporteur fluide relié aux conduites d'alimentation et de retour de la source chaude ou froide
ou
par l'intermédiaire d'un système de conduites ouvert contenant un agent caloporteur en particulier gazeux,
chaleur qui est envoyée ou prélevée dans des radiateurs, des refroidisseurs, des échangeurs de chaleur ou d'autres objets à chauffer ou à refroidir qui constituent des consommateurs de chaleur ou des fournisseurs de chaleur,
- un système de régulation électronique comportant un micro-ordinateur muni d'un processeur central (CPU), d'une mémoire à lecture-écriture (RAM), d'au moins une mémoire non volatile et éventuellement d'une interface E/S
et
- des capteurs de température pour capter la température effective de la source chaude ou froide et éventuellement de consommateurs de chaleur ou d'objets à refroidir, de parois et/ou de l'air ambiant,
caractérisé par
(A) une unité de commande de préférence indépendante de la source chaude ou froide comportant
(AA) un micro-ordinateur muni d'un processeur central (CPU), d'une mémoire à lecture-écriture (RAM) et d'une mémoire non volatile pour
- des températures externes moyennes caractéristiques d'une ou plusieurs zones climatiques, associées à des dates civiles et éventuellement à des heures du jour
- et éventuellement
- des valeurs de correction pour les températures externes moyennes caractéristiques,
- des valeurs corrigées des températures externes moyennes caractéristiques,
- des températures de consigne de la source chaude ou froide,
- des valeurs de correction des températures de consigne de la source chaude ou froide,
- des températures de consigne pour le fonctionnement diurne, nocture et de protection contre le gel,
- des valeurs de référence de paramètres de régulation
et
- des valeurs de données correspondantes extraites ou reçues d'une source de données ou d'un dispositif de commande externe,
- qui accomplit les opérations suivantes :
- traitement des données d'entrée,
- interrogation commandée dans le temps ou synchronisée des températures externes moyennes caractéristiques mémorisées et éventuellement de valeurs de correction ou de températures de consigne mémorisées à des instants d'interrogation prédéterminés,
ou
- réception ou extraction de valeurs de données correspondantes d'une source de données ou d'un dispositif de commande externe, éventuellement avec mémorisation ou mémorisation temporaire,
- détermination de la température de consigne de la source chaude ou froide ou de l'agent caloporteur fluide en fonction de la date civile correspondante et éventuellement en outre en fonction de la température externe moyenne caractéristique de la zone climatique correspondante, associée à l'heure du jour correspondante, à des instants d'interrogation déterminés préétablis,
- éventuellement correction de la température de consigne de la source chaude ou froide obtenue sur la base de la température externe moyenne caractéristique pour les instants d'interrogation prédéterminés
et
- commande du régulateur de la source chaude, éventuellement après conversion de données et par l'intermédiaire d'une interface,
et
(A2) une interface pour un régulateur
et
(B) un régulateur pour la température de la source chaude ou froide, qui est prévu sur, dans ou près de la source chaude ou froide,
avec
- une interface pour la transmission de données entre le régulateur et l'unité de commande,
- un convertisseur A/N pour la conversion A/N des signaux de sortie analogiques des capteurs de température,
- un micro-ordinateur muni d'un processeur central (CPU), d'une mémoire à lecture-écriture et d'une mémoire non volatile, qui accomplit les opérations suivantes :
- comparaison des températures de consigne et effective,
- excitation de relais et/ou de composants de réglage en fonction des températures de consigne et effective d'après des caractéristiques de régulateur fixes ou sélectionnables,
- commande de l'interface pour l'unité de commande et éventuellement conversion de données pour l'interface,
- des circuits d'attaque pour des relais et/ou des dispositifs d'excitation pour des composants de réglage,
et
- un ou plusieurs relais et/ou composants de réglage pour l'excitation du dispositif de production de chaleur de la source chaude ou du dispositif de production de froid de la source froide, en particulier de brûleurs dans des chaudières, de régulateurs à vannes, de pompes de circulation, de vannes de régulation et/ou de pompes de chargement de réservoirs.

15. Dispositif selon la revendication 14, caractérisé en ce que l'unité de commande (A) présente un capteur de température, éventuellement avec un convertisseur A/N associé, et en ce que le micro-ordinateur est agencé de telle manière que, sur la base du signal de sortie du capteur de température ambiante, il réalise une correction des valeurs de la température de consigne de la source chaude ou froide qui sont lues sur le profil de température de la relation entre la température de consigne de la source chaude ou froide et la température externe moyenne caractéristique.

16. Dispositif selon la revendication 14 ou 15, caractérisé en ce que le micro-ordinateur de l'unité de commande (A) est agencé de telle manière qu'il permet une modification sélectionnable de la pente et de la valeur absolue de la température du profil de température de la relation entre la température de consigne de la source chaude ou froide et la température externe moyenne caractéristique en fonction d'une introduction manuelle ou de valeurs de correction introduites, transmises par transfert de données ou mémorisées.

17. Dispositif selon l'une des revendications 14 à 16, caractérisé en ce que l'unité de commande (A) présente un module de zones climatiques remplaçable qui contient une mémoire non volatile ou qui est agencé pour l'excitation d'un domaine partiel de la mémoire non volatile de l'unité de commande (A), dans lequel sont mémorisées des valeurs de la température externe moyenne caractéristique associées à des dates civiles et éventuellement à des heures du jour pour des zones climatiques déterminées préétablies.
